# EUROPEAN PATENT APPLICATION

(11) **EP 4 773 634 A2**
(43) Date of publication of application: **08.07.2026**
(21) Application number: 26158686.1
(22) Date of filing: 01.02.2023
(51) Int. Cl.: H04W 4/02

(54) **METHOD AND APPARATUS FOR DISCOVERING EDGE SERVICE**

(30) Priority: 14.02.2022 CN 202210135574
(62) Divisional of application: 23752270.1
(71) Applicant: Huawei Technologies Co., Ltd., Shenzhen, Guangdong 518129 (CN)
(72) Inventor: WEI, Xinpeng, SHENZHEN, 518129 (CN); ZHU, Fenqin, SHENZHEN, 518129 (CN)
(74) Representative: Körber, Martin Hans

(57) **Abstract**

This application provides a method and an apparatus for discovering an edge service. The method includes: A first network element receives first information, where the first information includes first service information. The first network element receives second information, where the second information includes first domain name information. When the first domain name information corresponds to the first service information, the first network element determines, for a first terminal device, an application server that is the same as that of a second terminal device or an application server in an edge network that is the same as that of a second terminal device. The first network element sends a first rule to indicate a second network element to send first application server address information to the first terminal device, or the first network element sends a third rule, where the third rule includes second option information, and the second option information is used by a DNS server to determine application server address information. The method provided in this application can be used to determine a same application server or an application server in a same edge network for terminal devices belonging to a same terminal group, and reduce an interaction delay between the terminal devices in the terminal group.

## Description

This application claims priority to Chinese Patent Application No. 202210135574.4, filed with the China National Intellectual Property Administration on February 14, 2022 and entitled "METHOD AND APPARATUS FOR DISCOVERING EDGE SERVICE", which is incorporated herein by reference in its entirety.

### TECHNICAL FIELD

Embodiments of this application relate to the communication field, and more specifically, to a method and an apparatus for discovering an edge service.

### BACKGROUND

In a 5th generation (5th generation, 5G) communication system, to use an edge service, a terminal device needs to obtain an edge application server (edge application server, EAS) address by using a domain name system (domain name system, DNS) based service discovery mechanism. For example, when accessing a service, the terminal device first initiates a DNS query request to an edge application server discovery function (edge application server discovery function, EASDF) network element; the EASDF network element reports, according to an indication of a session management function (session manage function, SMF) network element, information related to the DNS query request to the SMF network element; the SMF network element provides, for the EASDF network element, client subnet (EDNS client subnet, ECS) option (ECS option) information of a DNS extension mechanism corresponding to the DNS query request; the EASDF network element adds the ECS option information to the DNS query request; and a DNS server (DNS server) performs query based on the ECS option information and returns the corresponding EAS address.

Currently, the method can provide an edge application discovery service only for a single terminal device, but the method cannot meet low-latency requirements of a plurality of terminal devices accessing a same service, for example, a plurality of terminal devices in an interactive augmented reality (augmented reality, AR) game.

### SUMMARY

Embodiments of this application provide a method and an apparatus for discovering an edge service, so that a plurality of terminal devices accessing a specific service can be connected to a same EAS or an EAS in a same edge network, thereby reducing an interaction delay between the plurality of terminal devices.

According to a first aspect, a method for discovering an edge service is provided, and the method may be performed by a first network element or by a chip used in the first network element. For example, the first network element may be a session management network element. For example, the method is performed by the first network element. The method includes: The first network element receives first information, where the first information includes first service information. The first network element receives second information, where the second information includes first domain name information, the first domain name information is included in first domain name system DNS query request information sent by a first terminal device, and the first DNS query request information is used to request application server address information corresponding to the first domain name information. When the first domain name information corresponds to the first service information, the first network element determines, for the first terminal device, an application server that is the same as that of a second terminal device, where the second terminal device and the first terminal device access a same service. The first network element sends a first rule, where the first rule includes first application server address information, the first application server address information indicates the same application server, and the first rule indicates a second network element to send the first application server address information to the first terminal device.

In this application, that the first network element determines, for the first terminal device, the application server that is the same as that of the second terminal device may be understood as that the first network element determines, for the first terminal device based on the first information, the application server that is the same as that of the second terminal device. That the first application server address information indicates the same application server may also be understood as that the first application server address information is an address corresponding to the same application server, or may be understood as that the first application server address information indicates an address corresponding to the same application server. That the first rule indicates the second network element to send the first application server address information to the first terminal device may also be understood as that the first rule is used to control the second network element to send the first application server address information to the first terminal device, or may be understood as that the second network element sends the first application server address information to the first terminal device according to the first rule. In this application, the second terminal device may include one or more terminal devices, or the first terminal device and the second terminal device may belong to a same terminal group.

In this embodiment provided in this application, the first network element receives the first information from a fourth network element, where the first information includes the first service information, the first service information is information about a service accessed by a terminal in a terminal group, the terminal group may include a plurality of terminal devices that access the service corresponding to the first service information, and the fourth network element may be a policy control function network element. The first terminal device sends the DNS query request information to the second network element. The second network element may be an edge application server discovery function network element. The DNS query request information includes the first domain name information. The second network element reports the first domain name information to the first network element. The first network element determines whether a service corresponding to the first domain name information matches the first information, that is, the first network element determines whether the first terminal device belongs to the terminal group. If the first terminal device belongs to the terminal group, the first network element selects, for the first terminal device, an application server address that is the same as that of another terminal device in the terminal group, where the application server address may be an edge application server address. This embodiment provided in this application can be used to select a same application server address for terminal devices accessing a same service, and reduce an interaction delay between the plurality of terminal devices.

With reference to the first aspect, in some implementations of the first aspect, the first information includes first identification information, and the first identification information indicates a terminal device that accesses a same application server as the first terminal device.

In this application, that the first identification information indicates the terminal device that accesses the same application server as the first terminal device may be understood as that the first identifier identifies the terminal device that accesses the same application server, or may be understood as that the first identification information identifies the terminal device that accesses the same application server as the first terminal device, or may be understood as that terminal devices corresponding to the same first identification information access the same application server, or may be understood as that terminal devices corresponding to the same first identification information access the same application server when a same service is accessed, or may be understood as that terminal devices corresponding to the same first identification information determine the same application server, or may be understood as that terminal devices corresponding to the same first identification information and accessing a same service determine the same application server. The first terminal device and the second terminal device correspond to the same first identification information.

In this embodiment provided in this application, the policy control function network element may add the first identification information to the terminal group, so that after receiving the DNS query request information from the terminal device, the first network element can determine, based on a case in which the terminal device has the first identification information corresponding to the terminal group, to select for the terminal device, the application server address that is the same as that of the another terminal device in the corresponding terminal group.

With reference to the first aspect, in some implementations of the first aspect, the second terminal device belongs to the terminal device indicated by the first identification information.

With reference to the first aspect, in some implementations of the first aspect, the first terminal device belongs to the terminal device indicated by the first identification information. With reference to the first aspect, in some implementations of the first aspect, that the first network element determines, for the first terminal device, an application server that is the same as that of a second terminal device includes: The first network element determines the same the application server for the first terminal device and the second terminal device that correspond to the same first identification information.

In this embodiment provided in this application, if the second terminal device and the first terminal device correspond to the same first identification information, the second terminal device and the first terminal device belong to a same terminal group, and the first network element can determine a same application server address for the first terminal device and the second terminal device based on the first identification information. This reduces interaction delays between the first terminal device and the second terminal device and between the first terminal device and the another terminal device in the same terminal group.

With reference to the first aspect, in some implementations of the first aspect, the first information includes location area information.

In this embodiment provided in this application, both the first terminal device and the second terminal device are located in a location area indicated by the location area information, and the first network element can determine, based on the location area information, the same application server address for terminal devices that belong to the location area and access a same service. This reduces the interaction delay between the terminal devices.

With reference to the first aspect, in some implementations of the first aspect, the first information includes first indication information, and the first indication information indicates to determine a same application server for terminal devices accessing a same service.

In this application, that the first indication information indicates to determine the same application server for the terminal devices that access the same service may be understood as that the first indication information indicates to determine the same application server for the terminal devices, or may be understood as that the first indication information indicates to determine the same application server for the terminal devices that access the same service and that correspond to the same first identification information, or may be understood as that the first indication information indicates to determine the same application server for the terminal devices that access a service corresponding to the first service information.

With reference to the first aspect, in some implementations of the first aspect, that the first network element determines, for the first terminal device, an application server that is the same as that of a second terminal device includes: The first network element determines, for the first terminal device based on the first indication information, the application server that is the same as that of the second terminal device.

In this embodiment provided in this application, the first information sent by the fourth network element may include the first indication information, to indicate the first network element to select the same application server for the terminal devices that access the same service or the terminal devices that belong to the terminal group. This reduces the interaction delay between the plurality of terminal devices.

With reference to the first aspect, in some implementations of the first aspect, before the first network element sends a first rule, the method further includes: The first network element sends a second rule, where the second rule includes first option information, the first option information is used by a DNS server to determine application server address information, the second rule indicates the second network element to send second DNS query request information to the DNS server, and the second DNS query request information includes the first option information and the first domain name information.

Specifically, a first option corresponding to the first option information, namely, a first ECS option, is used by the DNS server to determine the application server address information. The second network element generates the first ECS option based on the first option information, and adds the first ECS option to the second DNS query request information, that is, the second DNS query request information includes the first ECS option corresponding to the first option information and the first domain name information. The DNS server determines the application server address information based on the first ECS option.

In this embodiment provided in this application, the first network element may send the second rule to the second network element, to indicate the second network element to send the DNS query request to the DNS server. The DNS server queries, based on the first ECS option in the query request, the application server address corresponding to the service, so that when the first network element does not store the application server address corresponding to the terminal group, the corresponding application server address can be obtained in a query manner.

With reference to the first aspect, in some implementations of the first aspect, the method further includes: The first network element receives third information, where the third information includes the first domain name information and one or more pieces of application server address information, and the one or more pieces of application server address information are determined by the DNS server.

Specifically, the one or more pieces of application server address information is returned by the DNS server to the second network element by using DNS query response information corresponding to the DNS query request information, and the second network element sends one or more application server addresses to the first network element by using the third information.

In this embodiment provided in this application, the DNS server obtains, through querying based on the first ECS option, the application server address corresponding to the service, and sends the application server address to the second network element, and then the second network element sends the application server address to the first network element, so that when the first network element does not store the application server address corresponding to the terminal group, the corresponding application server address can be obtained in a DNS query manner. With reference to the first aspect, in some implementations of the first aspect, before the first network element sends a first rule, the method further includes: The first network element sends first request information, where the first request information includes second application server address information, and the second application server address information indicates an application server determined by the first network element.

In this embodiment provided in this application, after determining the application server for the terminal device, the first network element may send the application server address to the third network element. The third network element may be a data storage network element, and the third network element updates the application server address. This prevents first network elements from determining different application servers for terminal devices in a same terminal group when there are a plurality of the first network elements.

With reference to the first aspect, in some implementations of the first aspect, after the first network element sends a second rule, the method further includes: The first network element sends first request information, where the first request information includes second application server address information, and the second application server address information indicates an application server determined by the first network element. In this embodiment provided in this application, when there are a plurality of first network elements, each first network element sends the first option information, the DNS server queries the corresponding application server address, and may send, to the third network element, the application server address determined by the first network element, and the third network element updates the application server address. This prevents the first network elements from determining different application servers for terminal devices in a same terminal group.

With reference to the first aspect, in some implementations of the first aspect, the method further includes: The first network element receives first response information responding to the first request information, where the first response information includes the first application server address information.

In this embodiment provided in this application, the third network element updates the application server address selected by the first network element, so that when there are a plurality of first network elements, that is, terminal devices in a terminal group are connected to different first network elements, the same application server address can be returned to the first network elements. This prevents the plurality of first network elements from selecting different application server addresses for the terminal devices in the same terminal group.

With reference to the first aspect, in some implementations of the first aspect, application servers indicated by the second application server address information and the first application server address information are the same.

In this embodiment provided in this application, when there are a plurality of first network elements, application server addresses determined by the first network elements for the terminal devices in the terminal group may be the same, and the third network element updates and confirms the application server addresses, to ensure that the first network elements finally return the same application server address to the terminal devices.

With reference to the first aspect, in some implementations of the first aspect, before the first network element sends a first rule, the method further includes: The first network element sends a second rule, where the second rule includes first option information, the first option information is used by a DNS server to determine application server address information, the second rule indicates the second network element to send second DNS query request information to the DNS server, and the second DNS query request information includes the first option information and the first domain name information.

With reference to the first aspect, in some implementations of the first aspect, the method further includes: The first network element receives third information, where the third information includes the first domain name information and one or more pieces of application server address information, and the one or more pieces of application server address information are determined by the DNS server.

With reference to the first aspect, in some implementations of the first aspect, the first application server address information is one of the one or more pieces of application server address information.

In this embodiment provided in this application, when there is only one first network element, that is, when terminal devices in a terminal group are connected to a same first network element, the first network element can determine the first application server address information based on the one or more pieces of application server address information in the third information, that is, the first network element selects one piece of the one or more pieces of application server address information as the first application server address, and the first network element can select the first application server address for all terminal devices accessing a same service, or the first network element can select the first application server address for terminal devices accessing a same service and correspond to the same first identifier. A same application server can be selected for the terminal devices belonging to the same terminal group. This reduces the interaction delay between the plurality of terminal devices, and a third party does not need to coordinate application server address information, thereby reducing resource overheads.

With reference to the first aspect, in some implementations of the first aspect, before the first network element sends a first rule, the method further includes: The first network element receives fourth information, where the fourth information includes the first application server address information.

In this embodiment provided in this application, the third network element can store application server address information corresponding to the terminal group, and actively send the application server address information to the first network element. That is, the third network element can send the fourth information. When the first network element does not store the corresponding application server address, the third network element can provide the application server address for the first network element, and the first network element provides the address for each terminal device in the terminal group. This reduces the interaction delay between the terminal devices in the terminal group.

With reference to the first aspect, in some implementations of the first aspect, before the first network element receives fourth information, the method further includes: The first network element sends fifth information, where the fifth information is used to obtain the application server address information corresponding to the first domain name information.

In this embodiment provided in this application, when the first network element does not store the application server address corresponding to the terminal group, the first network element can obtain the corresponding address by sending request information to the third network element.

With reference to the first aspect, in some implementations of the first aspect, the first information includes the first application server address information.

In this embodiment provided in this application, the fourth network element can directly provide, for the first network element, the application server address corresponding to the terminal group, and the first network element can select the address for each terminal device in the terminal group, without obtaining or querying corresponding address information from a third party. This reduces resource overheads.

According to a second aspect, a method for discovering an edge service is provided, and the method may be performed by a fourth network element or by a chip used in the fourth network element. For example, the fourth network element may be a policy control function network element. For example, the method is performed by the fourth network element. The method includes: The fourth network element receives application function request information, where the application function request information is used to control routing of a service traffic. The fourth network element generates first information based on the application function request information, where the first information includes first service information. The fourth network element sends the first information.

In this embodiment provided in this application, the fourth network element generates the first information based on the application function request information, and the first information includes the first service information. After receiving service information accessed by a terminal device, for example, first domain name information, a first network element determines, based on the first information, whether the terminal device belongs to a terminal group, and if the terminal device belongs to the terminal group, selects, for the terminal device, an application server that is the same as that of another terminal device in the terminal group. This reduces an interaction delay between a plurality of terminal devices.

With reference to the second aspect, in some implementations of the second aspect, the first information includes first identification information, and the first identification information indicates a terminal device that accesses a same application server as a first terminal device.

In this embodiment provided in this application, the first identification information indicates the terminal device that accesses the same application server as the first terminal device, so that after receiving DNS query request information from the terminal device, the first network element determines, based on identification information corresponding to the terminal device group, that an application server address that is the same as that of another terminal device in the same terminal group needs to be determined for the terminal device.

With reference to the second aspect, in some implementations of the second aspect, the first information includes location area information.

In this embodiment provided in this application, the first network element can determine, based on the location area information, a same application server address for terminal devices that belong to a location area and access a same service. This reduces the interaction delay between the terminal devices.

With reference to the second aspect, in some implementations of the second aspect, the first information includes first indication information, and the first indication information indicates to determine a same application server for terminal devices accessing a same service.

In this embodiment provided in this application, the first information sent by the fourth network element may include the first indication information, to indicate the first network element to determine the same application server address for the terminal devices that are in the same terminal group and that access the same service. This reduces the interaction latency between the plurality of terminal devices.

With reference to the second aspect, in some implementations of the second aspect, the first information includes first application server address information, and the first application server address information indicates an application server determined by a first network element for the first terminal device.

In this embodiment provided in this application, the fourth network element may provide, for the first network element, an application server address corresponding to the terminal group, and the first network element can directly determine the address for each terminal device in the terminal group. This reduces the interaction delay between the plurality of terminal devices, without obtaining or querying a corresponding application server address or edge network information from a third party, and reduces resource overheads.

According to a third aspect, a method for discovering an edge service is provided. The method may be performed by a fifth network element or a chip used in the fifth network element. For example, the fifth network element may be an application function network element. For example, the method is performed by the fifth network element. The method includes: The fifth network element sends application function request information, where the application function request information is used to control routing of a service traffic, the application function request information includes first service information, the first service information indicates a service accessed by a terminal group, and the application function request information is further used by a fourth network element to generate first information.

In this embodiment provided in this application, the fifth network element sends the application function request information to the fourth network element, so that the fourth network element generates the first information. The application function request information includes the service information, so that the fourth network element can generate service information in the first information based on the service information, and send the service information to a first network element. The first network element determines, based on the first information, whether a terminal device belongs to the terminal group, and if the terminal device belongs to the terminal group, selects, for the terminal device, an application server that is the same as another terminal device in the terminal group. This reduces an interaction delay between a plurality of terminal devices. That the application function request information is used to control routing of the service traffic may be understood as that the application function request information is used to control selection of the same application server for the terminal devices in the terminal group.

With reference to the third aspect, in some implementations of the third aspect, the application function request information includes first identification information.

In this embodiment provided in this application, the application function request information includes the first identification information, so that the fourth network element can generate first identification information in the first information based on the first identification information in the application function request information, and send the first identification information to the first network element; and the first network element can select, for the terminal device based on the first identification information, the application server that is the same as that of the another terminal device in the terminal group. This reduces the interaction delay between the plurality of terminal devices.

With reference to the third aspect, in some implementations of the third aspect, the application function request information includes location area information.

In this embodiment provided in this application, the application function request information includes the location area information, so that the fourth network element can generate location area information in the first information based on the location area information in the application function request information, and send the location area information to the first network element; and the first network element can determine, based on the location area information, the same application server address for the terminal devices that belong to the location area and access the same service. This reduces the interaction delay between the plurality of terminal devices.

With reference to the third aspect, in some implementations of the third aspect, the application function request information may further include first indication information, and the first indication information indicates to determine the same application server for the terminal devices belonging to the same terminal group.

In this embodiment provided in this application, the application function request information includes the first indication information, so that the fourth network element can generate first indication information in the first information based on the first indication information in the application function request information, and send the first indication information to the first network element; and the first network element determines, based on the first indication information, the same application server address for the terminal devices in the same group, or the terminal devices that are in the same terminal group and that access the same service. This reduces the interaction delay between the plurality of terminal devices.

With reference to the third aspect, in some implementations of the third aspect, the application function request information includes first application server address information, and the first application server address information indicates an application server determined for the first terminal device.

In this embodiment provided in this application, the application function request information includes the first application server address information, so that the fourth network element can generate first application server address information in the first information based on the first application server address information in the application function request information, and send the first application server address information to the first network element; and the first network element directly determines the address for each terminal device in the terminal group. This reduces the interaction delay between the plurality of terminal devices, without obtaining or querying the corresponding application server addresses or the edge network information from the third party, and reduces the resource overheads.

With reference to the third aspect, in some implementations of the third aspect, the application function request information includes terminal device list information, and the terminal device list information includes one or more terminal device identifiers. The fourth network element generates, based on the terminal device list information, the first information for the terminal device indicated in the terminal device list information, and sends the first information to the first network element. The first network element determines the same application server for the terminal device indicated in the terminal device list.

In this embodiment provided in this application, the application function request information includes the terminal device list information, so that the fourth network element can generate, based on the application function request information, the first information for the terminal device indicated in the terminal device list information, and send the first information to the first network element. The fourth network element generates the first information for the terminal device indicated in the terminal device list information, and sends the first information to the first network element; and the first network element determines the same application server for the terminal device indicated in the terminal device list.

With reference to the third aspect, in some implementations of the third aspect, the application function request information includes both the terminal device list information and the first identification information. The first identification information corresponds to the terminal device in the terminal device list information, or it may be understood as specifying the first identification information for the terminal device in the terminal device list information.

In this embodiment provided in this application, the application function request information includes the terminal device list information and the third identification information, so that the fourth network element can generate, based on the application function request information, the first information for the terminal device indicated in the terminal list information and the terminal device indicated by the third identification information, and send the first information to the first network element; and the first network element determines the same application server for the terminal device indicated in the terminal device list information.

According to a fourth aspect, a method for discovering an edge service is provided, and the method may be performed by a first network element or by a chip used in the first network element. For example, the first network element may be a session management function network element. For example, the method is performed by the first network element. The method includes: The first network element receives first information, where the first information includes first service information. The first network element receives second information, where the second information includes first domain name information, the first domain name information is included in first DNS query request information sent by a first terminal device, and the first DNS query request information is used to request application server address information corresponding to the first domain name information. When the first domain name information corresponds to the first service information, the first network element determines, for the first terminal device, an application server in an edge network that is the same as that of a second terminal device, where the second terminal device and the first terminal device access a same service, and the application server address information corresponding to the first domain name information is application server address information in the same edge network. The first network element sends a third rule, where the third rule includes second option information, and the second option information is used by a DNS server to determine application server address information.

That the first network element determines, for the first terminal device, the application server in the edge network that is the same as that of the second terminal device may be understood as that the first network element determines, for the first terminal device, an application server in the edge network corresponding to a data network access identifier that is the same as that of the second terminal device, or may be understood as that the first network element determines, for the first terminal device, an application server corresponding to a data network access identifier that is the same as that of the second terminal device, or may be understood that the first network element determines, for the first terminal device, an application server in an edge part of a data network corresponding to a data network access identifier that is the same as that of the second terminal device. Specifically, the first network element determines, for the first terminal device based on the first information, the application server in the edge network that is the same as that of the second terminal device. In this application, the application server in the same edge network may be an application server corresponding to the same edge network, or may be an application server associated with the same edge network, or may be an application server in an edge network corresponding to a same data network access identifier, or may be an application server in a local network corresponding to a same data network access identifier, or may be an application server in a data network edge part corresponding to a same data network access identifier, or may be an application server corresponding to a same data network access identifier.

The first network element may determine same second option information for terminal devices in a terminal group, or may determine different second option information for terminal devices in a terminal group. The second option information is used by the DNS server to determine the application server address information, or a second option corresponding to the second option information, namely, a second ECS option, is used by the DNS server to determine the application server address information.

In this embodiment provided in this application, the first network element receives the first information from a fourth network element, where the first information includes the first service information, the first service information may be information about a service accessed by a terminal in the terminal group, the terminal group may include a plurality of terminal devices accessing a same service, and the fourth network element may be a policy control function network element. The first terminal device sends the DNS query request information to a second network element. The second network element may be an edge application server discovery function network element. The DNS query request information includes the first domain name information. The second network element reports the first domain name information to the first network element. The first network element determines whether a service corresponding to the first domain name information matches the first information, that is, the first network element determines whether the first terminal device belongs to the terminal group. If the first terminal device belongs to the terminal group, the first network element selects, for the first terminal device, the application server in the edge network that is the same as that of another terminal device in the terminal group. The second network element generates a second option, namely, the second ECS option, based on the second option information, and the DNS server determines the application server address information based on the second ECS option. This embodiment provided in this application can be used to select the application server address in the same edge network for the terminal devices accessing the same service, and reduce an interaction delay between the plurality of terminal devices.

With reference to the fourth aspect, in some implementations of the fourth aspect, the second option information is determined by the first network element based on second identification information, and the second identification information indicates the same edge network.

That the second option information is determined by the first network element based on the second identification information may be understood as that the second option information is associated with the second identification information. Specifically, the first network element may first determine the second identification information corresponding to the first domain name information, and then determine the second option information related to the second identification information.

That the second identification information indicates the same edge network may be understood as that the second identification information indicates the same edge network determined for the first terminal device and another terminal device in the terminal group, or may be understood as that the second identification information is same data network access identifier information corresponding to the terminal group, or may be understood as that the second identification information is the same data network access identifier information corresponding to the terminal devices that access the application server corresponding to the same data network access identifier, or may be understood that the second identification information is same data network access identifier information determined for the first terminal device and another terminal device in the terminal group.

With reference to the fourth aspect, in some implementations of the fourth aspect, the second option information is determined by the first network element based on a first name, and the first name indicates the same edge network.

That the second option information is determined by the first network element based on the first name may be understood that the second option information is associated with the first name. Specifically, the first network element may first determine the first name corresponding to the first domain name information, and then determine the second option information related to the first name. That the first name indicates the same edge network may be understood as that the first name may be a name of a local data network.

With reference to the fourth aspect, in some implementations of the fourth aspect, the first network element determines the second identification information or the first name based on location information of a terminal device, and determines the second option information based on the second identification information or the first name.

The first network element can determine the second identification information or the first name based on location information of one or more terminals in the terminal group. For example, the first network element selects second identification information corresponding to each terminal with a better location in the terminal group. The location information herein may be a geographical location, anchor user function network element information, or the like. After determining the second identification information or the first name, the first network element determines the second option information based on the second identification information or the first name. When the second identification information is the data network access identifier information, it may be understood as that the first network element determines the second option information corresponding to the data network access identifier information corresponding to the location of the terminal device, or it may be understood as that the first network element determines, for the first domain name information, the second option information corresponding to the data network access identifier information corresponding to the location of the terminal device. The location information of the terminal device may be the location information of the one or more terminal devices in the terminal group.

In this embodiment provided in this application, the first network element may first determine the second identification information or the first name, and determine the second option information based on the second identification information or the first name. The first network element sends the second option information to the second network element, the second network element sends the second option information and the first domain name information to the DNS server, and the DNS server queries the corresponding application server address information. Alternatively, it may be understood as that the second network element generates the second option, namely, the second ECS option, based on the second option information, and the DNS server determines the application server address information based on the second ECS option. The second option information is determined based on an identifier or a name of the edge network, and an application server address obtained through querying by the DNS server is the application server address. In addition, when all the terminal devices in the terminal group are connected to the same first network element, the first network element can select one piece of application server address information from the application server address information obtained by the DNS server through querying, and provide the application server address information for the terminal devices, so that all the terminal devices in the terminal group are connected to the application server in the same edge network. This reduces the interaction delay between the plurality of terminal devices.

With reference to the fourth aspect, in some implementations of the fourth aspect, the first information includes third identification information, and the third identification information indicates a terminal device that accesses an application server in a same edge network as the first terminal device.

That the third identification information indicates the terminal device that accesses the application server in the same edge network as the first terminal device may be understood as that the third identification information identifies the terminal device that accesses the application server in the same edge network, or may be understood as that the third identification information identifies the terminal device that accesses the application server in the same edge network as the first terminal device, or may be understood as that terminal devices corresponding to the same third identification information determine the application server in the same edge network, or may be understood as that terminal devices corresponding to the same third identification information access the application servers in the same edge network when a same service is accessed, or may be understood as that terminal devices corresponding to the same third identification information determine the application servers in the same edge network, or may be understood as that terminal devices corresponding to the same third identification information determine the same edge network, or may be understood as that terminal devices corresponding to the same third identification information and accessing the same service select the application servers in the same edge network.

In this embodiment provided in this application, the policy control network element can determine the third identification information to the terminal group, so that after receiving the DNS query request information from the terminal device, the first network element can determine, based on a case in which the terminal device has the third identification information corresponding to the terminal group, to select for the terminal device, the application server address in the same edge network of the another terminal device in the corresponding terminal group.

With reference to the fourth aspect, in some implementations of the fourth aspect, the second terminal device belongs to the terminal device indicated by the third identification information.

With reference to the fourth aspect, in some implementations of the fourth aspect, the first terminal device belongs to the terminal device indicated by the third identification information.

With reference to the fourth aspect, in some implementations of the fourth aspect, that the first network element determines, for the first terminal device, an application server in an edge network that is the same as that of a second terminal device includes: The first network element selects, for the first terminal device corresponding to the same third identification information, the application server in the edge network that is the same as that of the second terminal device.

In this embodiment provided in this application, if the second terminal device and the first terminal device correspond to the same third identification information, the second terminal device and the first terminal device belong to a same terminal group, and the first network element can determine the application server in the same edge network for the first terminal device and the second terminal device based on the third identification information. This reduces interaction delays between the first terminal device and the second terminal device and between the first terminal device and the another terminal device in the same terminal group.

With reference to the fourth aspect, in some implementations of the fourth aspect, the first information includes second indication information, and the second indication information indicates to determine an application server in a same edge network for terminal devices accessing a same service.

That the second indication information indicates to determine the application server in the same edge network for the terminal devices that access the same service may be understood as that the second indication information indicates to determine the application server in the same edge network for the terminal devices, or may be understood as that the second indication information indicates to determine the application server in the same edge network for the terminal devices that access the same service and that correspond to the same third identification information, or may be understood as that the second indication information indicates to determine the application server in the same edge network for the terminal devices that access a service corresponding to the first service information.

With reference to the fourth aspect, in some implementations of the fourth aspect, that the first network element determines, for the first terminal device, an edge network that is the same as that of a second terminal device includes: The first network element determines, for the first terminal device based on the second indication information, the application server in the edge network that is the same as that of the second terminal device.

In this embodiment provided in this application, the first information sent by the fourth network element may include the second indication information, to indicate the first network element to select the application server in the same edge network for the terminal devices that access the same service or the terminal devices that belong to the terminal group. This reduces the interaction delay between the plurality of terminal devices.

With reference to the fourth aspect, in some implementations of the fourth aspect, the method further includes: The first network element sends second request information, where the second request information includes the second identification information.

With reference to the fourth aspect, in some implementations of the fourth aspect, the method further includes: The first network element sends second request information, where the second request information includes the first name.

In this embodiment provided in this application, when there are a plurality of first network elements, after determining the edge network corresponding to the terminal group, the first network element sends the second identification information or the first name corresponding to the edge network to the third network element, and the third network element coordinates the edge network determined by each first network element. This can ensure that application server addresses selected by the plurality of first network elements for the terminal devices in the terminal group belong to the same edge network.

With reference to the fourth aspect, in some implementations of the fourth aspect, the method further includes: The first network element receives second response information responding to the second request information, where the second response information includes fourth identification information, and the fourth identification information indicates the edge network determined by the third network element.

With reference to the fourth aspect, in some implementations of the fourth aspect, the method further includes: The first network element receives second response information responding to the second request information, where the second response information includes a second name, and the second name indicates the edge network determined by the third network element.

In this embodiment provided in this application, when there are a plurality of first network elements, after determining the edge network corresponding to the terminal group, the first network element sends identification information of the edge network or a name of the edge network to the third network element, and the third network element performs coordination. If application server addresses selected by the first network elements for the terminal devices in the same terminal group are different, the third network element sends, to the first network element, an identifier or a name of the edge network to which the application server address accessed by the first terminal device in the terminal group belongs, so that the first network element reselects the edge network identifier or name returned by the third network element. This ensures that each terminal device in the terminal group accesses the application server in the same edge network, and reduces the interaction delay.

With reference to the fourth aspect, in some implementations of the fourth aspect, the fourth identification information and the second identification information correspond to the same edge network.

With reference to the fourth aspect, in some implementations of the fourth aspect, the first name and the second name correspond to the same edge network.

In this embodiment provided in this application, if edge network identification information sent by the third network element to the first network element and an edge network identifier determined by the first network element belong to the same edge network, or an edge network name sent by the third network element and an edge network name determined by the first network element belong to the same edge network, the first network element can directly select an edge server address in the edge network, and provide the edge server address for the terminal device. When there are a plurality of first network elements, the third network element can perform coordination and confirmation. This ensures that the application server address finally returned by the first network element to the terminal device is the application server address in the same edge network.

With reference to the fourth aspect, in some implementations of the fourth aspect, before the first network element sends a third rule, the method further includes: The first network element receives sixth information, where the sixth information includes the second identification information and/or the second option information.

With reference to the fourth aspect, in some implementations of the fourth aspect, before the first network element sends a third rule, the method further includes: The first network element receives sixth information, where the sixth information includes the first name and/or the second option information.

In this embodiment provided in this application, the third network element can store the edge network identification information or the edge network name corresponding to the terminal group, and actively send the edge network identification information or name to the first network element, so that the third network element can directly provide the edge network identifier or name for the first network element when the first network element does not store the corresponding application server address. The first network element can select the application server address in the edge network for each terminal device in the terminal group. This reduces the interaction delay between the terminal devices in the terminal group. Alternatively, the third network element can store the second option information, so that the DNS server queries the corresponding application server address based on the second option information and returns the address to the first network element. The first network element provides the address to the terminal device in the terminal group, and the first network element does not need to determine the second option information based on the location of the terminal device or the accessed service. This reduces the resource overheads.

With reference to the fourth aspect, in some implementations of the fourth aspect, before the first network element receives sixth information, the method further includes: The first network element sends seventh information, where the seventh information is used to obtain edge network information corresponding to the first domain name information.

That the seventh information is used to obtain the edge network information corresponding to the first domain name information may be understood as that the seventh information is used to obtain second identification information corresponding to the first domain name information.

In the embodiment provided in this application, when the first network element does not store the edge network information corresponding to the terminal group, the first network element can obtain the corresponding edge network information by sending request information to the third network element.

With reference to the fourth aspect, in some implementations of the fourth aspect, the first information includes the second identification information and/or the second option information.

With reference to the fourth aspect, in some implementations of the fourth aspect, the first information includes the first name and/or the second option information.

In this embodiment provided in this application, the fourth network element can directly provide the first network element with the edge network information corresponding to the terminal group, and the first network element can select the application server address in the edge network for each terminal device in the terminal group, without obtaining or querying corresponding address information from the third party. This reduces the resource overheads. Alternatively, the first information can further include the second option information used by the DNS server to query the corresponding application server address based on the second option information and return the address to the first network element. The first network element provides the address to the terminal device in the terminal group, and the first network element does not need to determine the second option information based on the location of the terminal device or the accessed service. This reduces the resource overheads.

With reference to the fourth aspect, in some implementations of the fourth aspect, the method further includes: The first network element sends a fourth rule, where the fourth rule includes first application server address information, the first application server address information indicates an application server in an edge network corresponding to the second identification information, or the first application server address information indicates an application server in an edge network corresponding to the first name, and the fourth rule indicates the second network element to send the first application server address information to the first terminal device.

That the first application server address information indicates the application server in the edge network corresponding to the second identification information may be understood as that the first application server address information is an address of the application server in the edge network corresponding to the second identification information, or may be understood as that the first application server address information is an address of the application server associated with the edge network corresponding to the second identification information. Similarly, that the first application server address information indicates the application server in the edge network corresponding to the first name may be understood as that the first application server address information is an address of the application server in the edge network corresponding to the first name, or may be understood as that the first application server address information is an address of the application server associated with the edge network corresponding to the first name.

In this embodiment provided in this application, the first network element selects the application server address from the finally determined edge network, and sends the application server address to the second network element. The second network element sends the application server address to the terminal device, to provide the application server address in the same edge network for all terminal devices in the terminal group. This reduces the interaction delay between the terminal devices.

According to a fifth aspect, a method for discovering an edge service is provided. The method may be performed by a fourth network element or a chip used in the fourth network element. For example, the fourth network element may be a policy control function network element. For example, the method is performed by the fourth network element. The method includes: The fourth network element receives application function request information, where the application function request information is used to control routing of a service traffic. The fourth network element generates first information based on the application function request information, where the first information includes first service information. The fourth network element sends the first information.

In this embodiment provided in this application, the fourth network element generates the first information based on the application function request information, and the first information includes the first service information. After receiving service information accessed by a terminal device, for example, first domain name information, a first network element determines, based on the first information, whether the terminal device belongs to a terminal group, and if the terminal device belongs to the terminal group, selects, for the terminal device, an application server that is the same as that of another terminal device in the terminal group or an application server in a same edge network. This reduces an interaction delay between a plurality of terminal devices.

With reference to the fifth aspect, in some implementations of the fifth aspect, the first information includes third identification information, and the third identification information indicates a terminal device that accesses an application server in a same edge network as the first terminal device.

In this embodiment provided in this application, an application function network element can add the third identification information to the terminal group, so that after receiving the DNS query request information from the terminal device, the first network element can determine, based on a case in which the terminal device has the third identification information corresponding to the terminal group, to select for the terminal device, the same application server address, or the application server address in the same edge network of the another terminal device in the corresponding terminal group.

With reference to the fifth aspect, in some implementations of the fifth aspect, the first information includes location area information.

In this embodiment provided in this application, the first network element can determine, based on the location area information, an application server address in a same edge network for terminal devices that belong to a location area and access a same service. This reduces the interaction delay between the terminal devices in the terminal group.

With reference to the fifth aspect, in some implementations of the fifth aspect, the first information further includes second indication information, and the second indication information indicates to determine an application server in a same edge network for terminal devices accessing a same service.

In this embodiment provided in this application, the first information sent by the fourth network element may include the second indication information, to indicate the first network element to select the application server in the same edge network for the terminal devices that access the same service or the terminal devices that belong to the terminal group. This reduces the interaction delay between the plurality of terminal devices.

With reference to the fifth aspect, in some implementations of the fifth aspect, the first information further includes second identification information and/or second option information, the second identification information indicates an edge network determined by the first network element for the first terminal device, and the second option information is used by a DNS server to determine application server address information.

That the second identification information indicates the edge network determined for the first terminal device may be understood as that the second identification information indicates the same edge network determined for the first terminal device and another terminal device in the terminal group, or may be understood as that the second identification information is same data network access identifier information corresponding to the terminal group, or may be understood as that the second identification information is the same data network access identifier information corresponding to the terminal devices that access the application server corresponding to the same data network access identifier, or may be understood as that the second identification information is same data network access identifier information determined for the first terminal device and another terminal device in the terminal group.

With reference to the fifth aspect, in some implementations of the fifth aspect, the first information includes a first name and/or the second option information, and the first name indicates an edge network determined by the first network element for the first terminal device.

That the first name indicates the edge network determined by the first network element for the first terminal device may be understood as that the first name indicates the same edge network determined by the first network element for the first terminal device and the another terminal device in the terminal group, or may be understood that the first name is a name of a same local data network determined for the first terminal device and the another terminal device in the terminal group, or may be understood as that the first name is a name of a same data network determined for the first terminal device and the another terminal device in the terminal group.

In this embodiment provided in this application, the fourth network element can provide, for the first network element, edge network identification information or name corresponding to the terminal group, so that the first network element can directly select the application server address in the edge network, without obtaining or querying the corresponding application server address or edge network information from a third party. This reduces the resource overheads. Alternatively, the fourth network element can provide the second option information for the first network element, so that the DNS server queries the corresponding application server address based on the second option information and returns the address to the first network element. The first network element provides the address for the terminal device in the terminal group, and the first network element does not need to determine the second option information based on a location of the terminal device or an accessed service. This reduces the resource overheads.

According to a sixth aspect, a method for discovering an edge service is provided. The method may be performed by a fifth network element or a chip used in the fifth network element. For example, the fifth network element may be an application function network element. For example, the method is performed by the fifth network element. The method includes: The fifth network element sends application function request information, where the application function request information is used to control routing of a service traffic, the application function request information includes service information, and the service information indicates a service accessed by a terminal group.

With reference to the sixth aspect, in some implementations of the sixth aspect, the application function request information is further used to generate first information.

In this embodiment provided in this application, the fifth network element sends the application function request information to a fourth network element, where that the application function request information is used to control routing of the service traffic may be understood as that the application function request information is used to control selection of an application server in a same edge network for a terminal device in the terminal group. The application function request information is used by the fourth network element to generate the first information, and the application function request information includes the service information, so that the fourth network element can generate service information in the first information based on the service information, and send the service information to a first network element. The first network element determines, based on the first information, whether the terminal device belongs to the terminal group, and if the terminal device belongs to the terminal group, selects, for the terminal device, an application server in a same edge network of another terminal device in the terminal group. This reduces an interaction delay between a plurality of terminal devices.

With reference to the sixth aspect, in some implementations of the sixth aspect, the application function request information includes third identification information.

In this embodiment provided in this application, the application function request information includes the third identification information, so that the fourth network element can generate third identification information in the first information based on the third identification information in the application function request information, and send the third identification information to the first network element; and the first network element can select, for the terminal device based on the third identification information, the application server in the same edge network of the another terminal device in the terminal group. This reduces the interaction delay between the plurality of terminal devices.

With reference to the sixth aspect, in some implementations of the sixth aspect, the application function request information includes location area information.

In this embodiment provided in this application, the application function request information includes the location area information, and the fourth network element generates, based on the location area information in the application function request information, the first information for the terminal device located in a location area indicated by the location area information. It may also be understood that the fourth network element generates location area information in the first information based on the location area information in the application function request information. The fourth network element generates the first information and sends the first information to the first network element, so that the first network element can determine, based on the location area information, the application server in the same edge network for terminal devices that belong to the location area and access the same service. This reduces the interaction delay between the plurality of terminal devices.

With reference to the sixth aspect, in some implementations of the sixth aspect, the application function request information may further include second indication information, and the second indication information indicates to determine the application server in the same edge network for the terminal devices belonging to the same terminal group.

In this embodiment provided in this application, the application function request information includes the second indication information, so that the fourth network element can generate second indication information in the first information based on the second indication information in the application function request information, and send the second indication information to the first network element; and the first network element determines, based on the second indication information, the application server address in the same edge network for the terminal devices in the same terminal group, or the terminal devices that are in the same terminal group and that access the same service. This reduces the interaction delay between the plurality of terminal devices.

With reference to the sixth aspect, in some implementations of the sixth aspect, the application function request information includes second identification information and/or second option information, the second identification information indicates an edge network determined for a first terminal device, and the second option information is used by a DNS server to determine application server address information.

With reference to the sixth aspect, in some implementations of the sixth aspect, the application function request information includes a first name and/or second option information, and the first name indicates an edge network determined for a first terminal device.

In this embodiment provided in this application, the application function request information includes the second identification information or the first name, so that the fourth network element can generate second identification information or first name in the first information based on the second identification information or the first name in the application function request information, and send the second identification information or the first name to the first network element. The first network element determines, for each terminal device in the terminal group, an application server address in the edge network corresponding to the second identification information or the first name. This reduces the interaction delay between the plurality of terminal devices, without obtaining or querying the corresponding application server address or edge network information from a third party, and reduces the resource overheads. The application function request information includes the second option information, so that the fourth network element can be based on the second option information in the application function request information, the DNS server queries the corresponding application server address based on the second option information and returns the corresponding application server address to the first network element. The first network element provides the corresponding application server address to the terminal device in the terminal group, and the first network element does not need to determine the second option information based on a location of the terminal device or an accessed service. This reduces the resource overheads.

With reference to the sixth aspect, in some implementations of the sixth aspect, the application function request information includes terminal device list information, and the terminal device list information includes one or more terminal device identifiers. The fourth network element generates, based on the terminal device list information, the first information for the terminal device indicated in the terminal device list information, and sends the first information to the first network element. The first network element determines the application server in the same edge network for the terminal device indicated in the terminal device list.

In this embodiment provided in this application, the application function request information includes the terminal device list information, so that the fourth network element can generate, based on the application function request information, the first information for the terminal device indicated in the terminal device list information, and send the first information to the first network element. The first network element determines the application server in the same edge network for the terminal device indicated in the terminal device list.

With reference to the sixth aspect, in some implementations of the sixth aspect, the application function request information includes both the terminal device list information and the third identification information. The third identification information corresponds to the terminal device in the terminal device list, or it may be understood as specifying the third identification information for the terminal device in the terminal device list. In this embodiment provided in this application, the application function request information includes the terminal device list information and the third identification information, so that the fourth network element can generate, based on the application function request information, the first information for the terminal device indicated in the terminal list information and the terminal device indicated by the third identification information, and send the first information to the first network element; and the first network element determines the application server in the same edge network for the terminal device indicated in the terminal device list information.

According to a seventh aspect, an apparatus for discovering an edge service is provided, including: a receiving unit, configured to receive first information, where the first information includes first service information, the receiving unit is further configured to receive second information, the second information includes first domain name information, the first domain name information is included in first domain name system DNS query request information sent by a first terminal device, and the first DNS query request information is used to request application server address information corresponding to the first domain name information; a determining unit, configured to: when the first domain name information corresponds to the first service information, determine, for the first terminal device, an application server that is the same as that of a second terminal device, where the second terminal device and the first terminal device access a same service; and a sending unit, configured to send a first rule, where the first rule includes first application server address information, the first application server address information indicates the same application server, and the first rule indicates a second network element to send the first application server address information to the first terminal device.

With reference to the seventh aspect, in some implementations of the seventh aspect, the sending unit is further configured to send a second rule, where the second rule includes first option information, the first option information is used by a DNS server to determine application server address information, the second rule indicates the EASDF network element to send second DNS query request information to the DNS server, and the second DNS query request information includes the first option information and the first domain name information.

With reference to the seventh aspect, in some implementations of the seventh aspect, the receiving unit is further configured to receive third information, where the third information includes the first domain name information and one or more pieces of application server address information, the one or more pieces of application server address information are determined by the DNS server, and second application server address information is one of the one or more pieces of application server address information.

With reference to the seventh aspect, in some implementations of the seventh aspect, the sending unit is further configured to send first request information, where the first request information includes the second application server address information, and the second application server address information indicates an application server determined by a first network element.

With reference to the seventh aspect, in some implementations of the seventh aspect, the receiving unit is further configured to receive first response information responding to the first request information, where the first response information includes the first application server address information.

With reference to the seventh aspect, in some implementations of the seventh aspect, the receiving unit is further configured to receive fourth information, where the fourth information includes the first application server address information.

With reference to the seventh aspect, in some implementations of the seventh aspect, the sending unit is further configured to send fifth information, where the fifth information is used to obtain the application server address information corresponding to the first domain name information.

According to an eighth aspect, an apparatus for discovering an edge service is provided, including: a receiving unit, configured to receive first information, where the first information includes first service information, the receiving unit is further configured to receive second information, the second information includes first domain name information, the first domain name information is included in first DNS query request information sent by a first terminal device, and the first DNS query request information is used to request application server address information corresponding to the first domain name information; a determining unit, configured to: when the first domain name information corresponds to the first service information, determine, for the first terminal device, an edge network that is the same as that of a second terminal device, where the second terminal device and the first terminal device access a same service, and the application server address information corresponding to the first domain name information is application server address information in the same edge network; and a sending unit, configured to send a third rule, where the third rule includes second option information, and the second option information is used by a DNS server to determine application server address information.

With reference to the eighth aspect, in some implementations of the eighth aspect, the sending unit is further configured to send second request information, where the second request information includes second identification information.

With reference to the eighth aspect, in some implementations of the eighth aspect, the receiving unit is further configured to receive second response information responding to the third request information, where the second response information includes fourth identification information, and the fourth identification information indicates an edge network determined by a third network element.

With reference to the eighth aspect, in some implementations of the eighth aspect, the receiving unit is further configured to receive sixth information, where the sixth information includes second identification information.

With reference to the eighth aspect, in some implementations of the eighth aspect, the sending unit is further configured to send seventh information, where the seventh information is used to obtain edge network information corresponding to the first domain name information.

With reference to the eighth aspect, in some implementations of the eighth aspect, the sending unit is further configured to send a fourth rule, where the fourth rule includes first application server address information, the first application server address information indicates an application server in an edge network corresponding to the second identification information, and the fourth rule indicates a second network element to send the first application server address information to the first terminal device.

According to a ninth aspect, an apparatus for discovering an edge service is provided, including: a receiving unit, configured to receive application function request information, where the application function request information is used to control routing of a service traffic; a processing unit, configured to generate first information based on the application function request information, where the first information includes first service information; and a sending unit, configured to send the first information.

According to a tenth aspect, a communication system is provided. The system includes the apparatus according to any one of the first aspect or the possible implementations of the first aspect, the apparatus according to any one of the second aspect or the possible implementations of the second aspect, and the apparatus according to any one of the third aspect or the possible implementations of the third aspect.

According to an eleventh aspect, a communication system is provided. The system includes the apparatus according to any one of the fourth aspect or the possible implementations of the fourth aspect, the apparatus according to any one of the fifth aspect or the possible implementations of the fifth aspect, and the apparatus according to any one of the sixth aspect or the possible implementations of the sixth aspect.

According to a twelfth aspect, a computer program product is provided. The computer program product includes a computer program or a group of instructions, and when the computer program or the group of instructions is run by a computer, the method according to any one of the first aspect or the possible implementations of the first aspect, the method according to any one of the second aspect or the possible implementations of the second aspect, and the method according to any one of the third aspect or the possible implementations of the third aspect are performed.

According to a thirteenth aspect, a computer program product is provided. The computer program product includes a computer program or a group of instructions, and when the computer program or the group of instructions is run by a computer, the method according to any one of the fourth aspect or the possible implementations of the fourth aspect, the method according to any one of the fifth aspect or the possible implementations of the fifth aspect, and the method according to any one of the sixth aspect or the possible implementations of the sixth aspect are performed.

According to a fourteenth aspect, a computer-readable medium is provided and configured to store a computer program. The computer program includes instructions used to perform the method according to any one of the first aspect or the possible implementations of the first aspect, the method according to any one of the second aspect or the possible implementations of the second aspect, or the method according to any one of the third aspect or the possible implementations of the third aspect.

According to a fifteenth aspect, a computer-readable medium is provided and configured to store a computer program. The computer program includes instructions used to perform the method according to any one of the fourth aspect or the possible implementations of the fourth aspect, the method according to any one of the fifth aspect or the possible implementations of the fifth aspect, and the method according to any one of the sixth aspect or the possible implementations of the sixth aspect.

According to a sixteenth aspect, a chip is provided, including a processor, configured to invoke, from a memory, instructions stored in the memory and run the instructions, so that a communication device in which the chip is installed performs the method according to any one of the first aspect or the possible implementations of the first aspect, the method according to any one of the second aspect or the possible implementations of the second aspect, and the method according to any one of the third aspect or the possible implementations of the third aspect.

In a possible implementation, the processor and the memory are integrated together.

In another possible implementation, the memory is located outside the communication apparatus.

The communication apparatus further includes a communication interface. The communication interface is configured for communication between the communication apparatus and another device, for example, data and/or signal sending or receiving. For example, the communication interface may be a transceiver, a circuit, a bus, a module, or another type of communication interface.

According to a seventeenth aspect, a chip is provided, including a processor, configured to invoke, from a memory, instructions stored in the memory and run the instructions, so that a communication device in which the chip is installed performs the method according to any one of the fourth aspect or the possible implementations of the fourth aspect, the method according to any one of the fifth aspect or the possible implementations of the fifth aspect, and the method according to any one of the sixth aspect or the possible implementations of the sixth aspect.

In a possible implementation, the processor and the memory are integrated together.

In another possible implementation, the memory is located outside the communication apparatus.

The communication apparatus further includes a communication interface. The communication interface is configured for communication between the communication apparatus and another device, for example, data and/or signal sending or receiving. For example, the communication interface may be a transceiver, a circuit, a bus, a module, or another type of communication interface.

According to an eighteenth aspect, an embodiment of this application further provides a communication apparatus. The apparatus includes at least one processor and an interface circuit, the interface circuit is configured by the at least one processor to obtain a program or instructions in at least one memory, and the at least one processor is configured to execute the program or the instructions, so that the communication apparatus performs the method according to any one of the first aspect or the possible implementations of the first aspect, or the method according to any one of the fourth aspect or the possible implementations of the fourth aspect.

According to a nineteenth aspect, an embodiment of this application further provides a communication apparatus. The apparatus includes at least one processor and an interface circuit, the interface circuit is configured by the at least one processor to obtain a program or instructions in at least one memory, the at least one processor is configured to execute the program or the instructions, so that the communication apparatus performs the method according to any one of the second aspect or the possible implementations of the second aspect, or the method according to any one of the fifth aspect or the possible implementations of the fifth aspect.

According to a twentieth aspect, an embodiment of this application further provides a communication apparatus. The apparatus includes at least one processor and an interface circuit, the interface circuit is configured by the at least one processor to obtain a program or instructions in at least one memory, and the at least one processor is configured to execute the program or the instructions, so that the communication apparatus performs the method according to any one of the third aspect or the possible implementations of the third aspect, or the method according to any one of the sixth aspect or the possible implementations of the sixth aspect.

### BRIEF DESCRIPTION OF DRAWINGS

FIG. 1 is a diagram of a system architecture to which embodiments of this application are applicable;
FIG. 2A and FIG. 2B are a schematic interaction diagram of an existing method for discovering an edge service;
FIG. 3 is a schematic interaction diagram of a method for discovering an edge service according to an embodiment of this application;
FIG. 4 is a schematic interaction diagram of another method for discovering an edge service according to an embodiment of this application;
FIG. 5A and FIG. 5B are a schematic interaction diagram of still another method for discovering an edge service according to an embodiment of this application;
FIG. 6A and FIG. 6B are a schematic interaction diagram of yet another method for discovering an edge service according to an embodiment of this application;
FIG. 7A to FIG. 7C are a schematic interaction diagram of still yet another method for discovering an edge service according to an embodiment of this application;
FIG. 8A and FIG. 8B are a schematic interaction diagram of a further method for discovering an edge service according to an embodiment of this application;
FIG. 9A and FIG. 9B are a schematic interaction diagram of a still further method for discovering an edge service according to an embodiment of this application;
FIG. 10A to FIG. 10C are a schematic interaction diagram of a yet further method for discovering an edge service according to an embodiment of this application;
FIG. 11A to FIG. 11C are a schematic interaction diagram of a still yet further method for discovering an edge service according to an embodiment of this application;
FIG. 12 is a schematic interaction diagram of a method for rediscovering an edge service according to an embodiment of this application;
FIG. 13 is a block diagram of an apparatus for discovering an edge service according to an embodiment of this application; and
FIG. 14 is a block diagram of another apparatus for discovering an edge service according to an embodiment of this application.

### DESCRIPTION OF EMBODIMENTS

The following describes technical solutions of embodiments in this application with reference to accompanying drawings.

The technical solutions in embodiments of this application are applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) system or a future 6th generation (6th Generation, 6G) system.

A terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. Further, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, or a terminal device in communication networks such as a public land mobile network (public land mobile network, PLMN), a 5G network, or a further 6G. This is not limited in embodiments of this application.

A network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, or a network device in communication networks such as a PLMN network, a 5G network, or a future 6G. This is not limited in embodiments of this application.

In this application, "being used to indicate" may include "being used to directly indicate" and "being used to indirectly indicate". When a piece of indication information is described as being used to indicate A, the indication information may directly indicate A or indirectly indicate A, but it does not necessarily indicate that the indication information carries A. In embodiments of this application, descriptions such as "when...", "in a case of...", and "if" all mean that the device performs corresponding processing in an objective case, and are not limited to time, and the device is not required to perform a determining action during implementation. This does not mean that there is another limitation.

In embodiments of this application, unless otherwise specified, a quantity of nouns indicates "a singular noun or a plural noun", namely, "one or more". "At least one" means one or more, "a plurality of" means two or more, and "a plurality of" in "one or more" means two or more similar types. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c may represent: a, b, c, a-b, a-c, b-c, or a-b-c, where a, b, and c may be singular or plural.

Edge computing (edge computing, EC) is a new network architecture. In the edge computing network architecture, computing resources are deployed on an edge side near users to provide nearest services. An application is initiated on the edge side. This can reduce a network transmission delay between a user and computing, and generate a faster network service response.

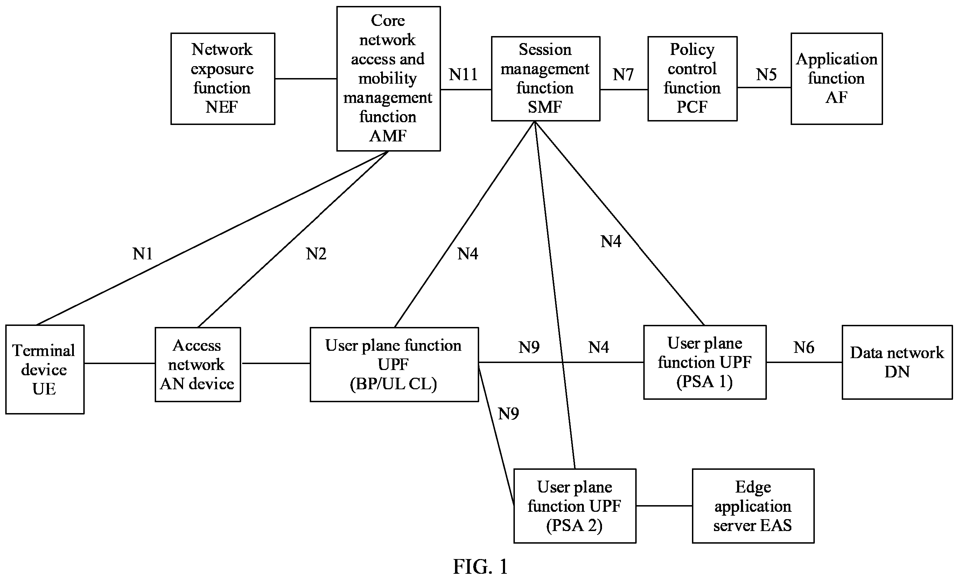

FIG. 1 is a schematic block diagram of an architecture of a communication system to which this application is applicable. As shown in FIG. 1, the following separately describes components in the network architecture.

A terminal device (terminal equipment) is an ingress for a mobile user to interact with a network, and can provide a basic computing capability and storage capability, display a service window to the user, and accept an operation input of the user. The terminal device may include various handheld devices, vehicle-mounted devices, wearable devices, computing devices that have a wireless communication function, or other processing devices connected to a wireless modem, and terminals in various forms, such as a mobile station (mobile station, MS), a terminal (terminal), user equipment (user equipment, UE), and a software terminal. For example, the terminal device is a mobile phone, a water meter, an electricity meter, or a sensor.

A (radio) access network (radio access network, (R)AN) element is configured to provide a network access function for authorized terminal devices in a specific area, and can use transmission tunnels with different quality based on levels, service requirements, and the like of the terminal devices.

The (R)AN element can manage radio resources and provide an access service for the terminal device, to forward a control signal and terminal device data between the terminal device and a core network. The (R)AN element may also be understood as a base station in a conventional network.

A user plane function (user plane function, UPF) network element is used for packet routing and forwarding, quality of service (quality of service, QoS) processing of user plane data, and the like.

In a future communication system, a user plane network element may still be the UPF network element, or may have another name. This is not limited in this application.

A data network (data network, DN) is a data network that provides a service for a user. Generally, a client is located in UE, and a server is located in the data network. The data network may be a private network, for example, a local area network, an external network that is not managed and controlled by an operator, for example, the internet, or a dedicated network jointly deployed by operators, for example, a network that provides an IMS service.

In the future communication system, the DN in a 5G communication system may be used, or an entity with a similar function may be replaced with another name. This is not limited in this application.

An access and mobility management function (access and mobility management function, AMF) network element is mainly used for mobility management, access management, and the like, and may be configured to implement a function in a mobility management entity (mobility management entity, MME) function other than session management, for example, an access authorization/authentication function.

In the future communication system, an access management network element may still be the AMF network element, or may have another name. This is not limited in this application.

A session management function (session management function, SMF) network element is mainly configured to perform session management, internet protocol (internet protocol, IP) address allocation and management of the terminal device, selection of an endpoint that can manage a user plane function and a policy control and charging function interface, downlink data notification, and the like.

In the future communication system, a session management function network element may still be the SMF network element, or may have another name. This is not limited in this application.

A network exposure function (network exposure function, NEF) network element is configured to expose a network capability to a third-party application, to implement friendly interconnection between the network capability and a service requirement.

In the future communication system, a network exposure network element may still be the NEF network element, or may have another name. This is not limited in this application.

A network repository (network repository) network element is configured to maintain real-time information of all network function services in a network.

In a 5G communication system, the network repository network element may be a network registration function (network repository function, NRF) network element. In the future communication system, a network repository network element may still be the NRF network element, or may have another name. This is not limited in this application.

A policy control function (policy control function, PCF) network element is a unified policy framework for instructing network behavior, and provides policy rule information and the like for control plane function network elements (such as the AMF and SMF network elements).

In the future communication system, a policy control network element may still be the PCF network element, or may have another name. This is not limited in this application.

A data management (data management) network element is configured to process a terminal device identifier, perform access authentication, registration, and mobility management, and the like.

In the 5G communication system, the data management network element may be a unified data management (unified data management, UDM) network element. In the future communication system, unified data management may still be the UDM network element, or may have another name. This is not limited in this application.

An application function (application function, AF) network element is configured to route data affected by an application, access a network, and interact with a policy framework for policy control.

In the future communication system, an application network element may still be the AF network element, or may have another name. This is not limited in this application.

An edge application server (edge application server, EAS) is an edge application server deployed in an edge data network (edge data network, EDN), and may also be referred to as an edge application (server), an application server, an application instance, an edge application instance, a multi-access edge computing (multi-access edge computing, MEC) application (server), an EAS function, or the like. The edge application may also be referred to as an "application instance", and is specifically an instance (instance) of a server application (for example, social media software, augmented reality (augmented reality, AR), or virtual reality (virtual reality, VR)) that is deployed and runs in the EDN. The EDN may be a local data network (local data network, LDN), and each LDN may be identified by a corresponding data network access identifier (data network access identifier, DNAI) or data network name (data network name, DNN). A network selects a UPF closest to the LDN to establish a transmission path for the UE, to ensure that the UE can normally access an edge service.

An edge application server discovery function (edge application server discovery function, EASDF) network element is mainly responsible for discovering the EAS, including functions such as registering with the NRF for discovery and selection, processing a DNS message according to an indication of the SMF (for example, receiving a DNS message processing rule sent by the SMF, sending a DNS message to a local DNS server or a central DNS server, adding an ECS option to a DNS query message, exchanging the DNS message sent by the UE, and notifying the SMF of EASDF-related information), and terminating DNS security.

It may be understood that the foregoing network elements or functions may be network elements in a hardware device, software functions running on dedicated hardware, or virtualized functions instantiated on a platform (for example, a cloud platform). One or more services may be obtained through division into the network elements or the functions. Further, services that exist independently of network functions may occur.

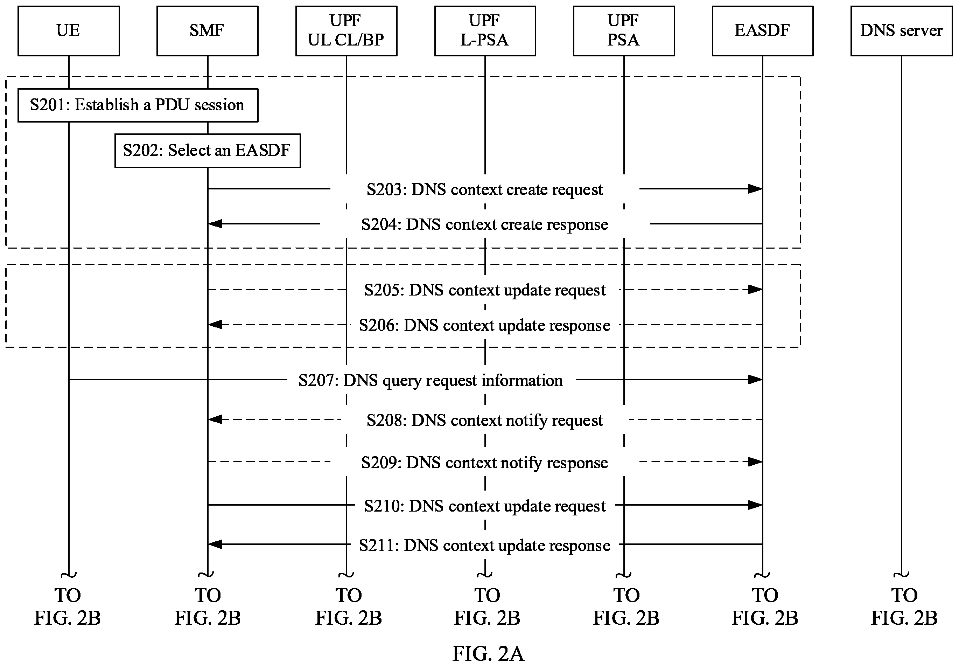

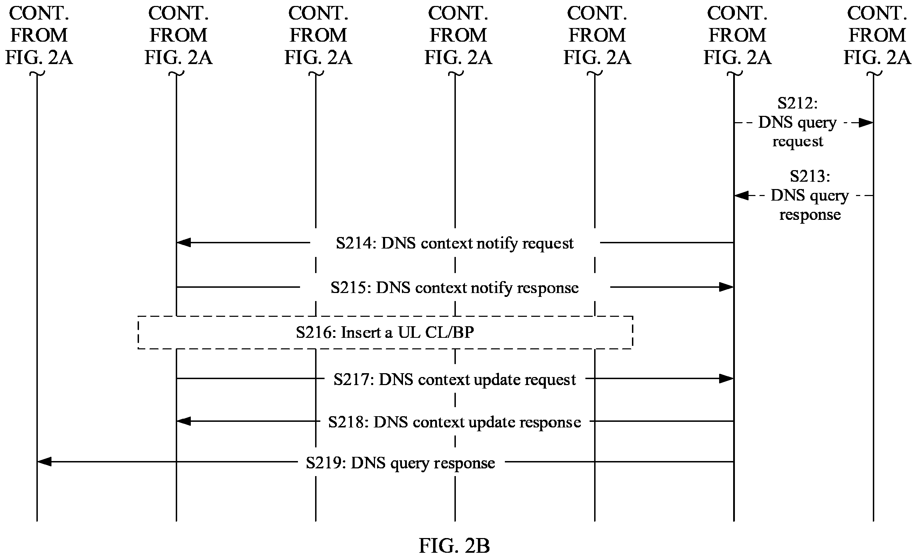

The following describes, with reference to FIG. 2A and FIG. 2B, an existing method for discovering an edge computing service.

S201: Establish a PDU session process.

A session of a user plane path between UE and a UPF is established.

S202: An SMF network element selects an EASDF network element.

S203: The SMF network element sends a DNS context create request (Neasdf_DNSContext_Create Request) to the selected EASDF network element.

S204: The EASDF network element sends a DNS context create response (Neasdf_DNSContext_Create Response) to the SMF network element.

S205: The SMF network element sends a DNS context update request (Neasdf_DNSContext_Update Request) to the EASDF network element.

S206: The EASDF network element sends a DNS context update response (Neasdf_DNSContext_Update Response) to the SMF network element.

S207: The UE sends a DNS query (DNS query) request to the EASDF network element.

S208: The EASDF network element sends a DNS context notify request (Neasdf_DNSContext_Notify Request) to the SMF network element.

S209: The SMF network element sends a DNS context notify response (Neasdf_DNSContext_Notify Response) to the EASDF network element.

S210: The SMF network element sends a DNS context update request (Neasdf_DNSContext_Update Request) to the EASDF network element.

Optionally, the update request includes ECS option information constructed by the SMF network element, and the ECS option information includes an internet protocol (internet protocol, IP) address of a user access network, so that a DNS server selects, based on the IP address, an address of a server closer to a user, and the user can access a service nearby.

S211: The EASDF network element sends a DNS context update response (Neasdf_DNSContext_Update Response) to the SMF network element.

S212: The EASDF network element sends a DNS query request to the DNS server.

S213: The DNS server sends a DNS query response (DNS response) to the EASDF network element.

S214: The EASDF network element sends a DNS context notify request (Neasdf_DNSContext_Notify Request) to the SMF network element.

S215: The SMF network element sends a DNS context notify response (Neasdf_DNSContext_Notify Response) to the EASDF network element.

S216: The SMF network element inserts an uplink classifier (uplink classifier, UL CL) and an L-PSA.

S217: The SMF network element sends a DNS context update request (Neasdf_DNSContext _Notify Request) to the EASDF network element.

S218: The EASDF network element sends a DNS context update response (Neasdf_DNSContext_Notify Response) to the SMF network element.

S219: The EASDF network element sends a DNS query response to the UE.

The DNS query response includes an EAS address.

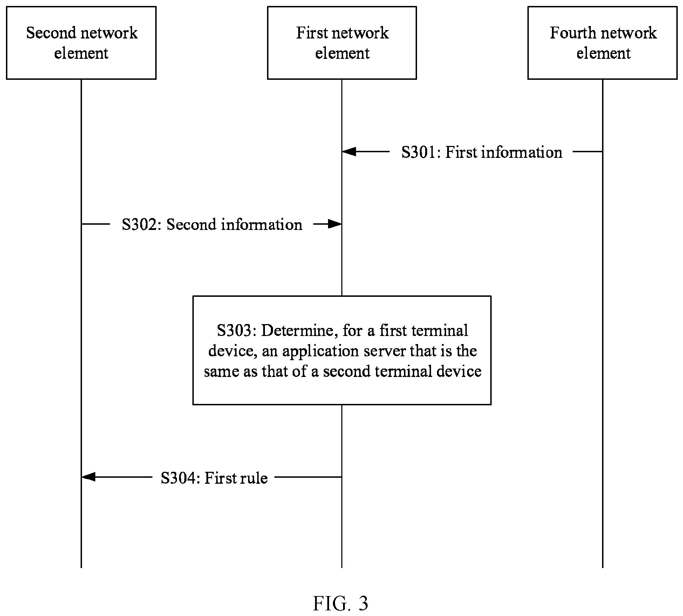

The discovery method described in FIG. 2A and FIG. 2B is applicable only to edge service discovery of single UE, and cannot be applicable to an edge service discovery process of multiple UE that uses a same service. FIG. 3 is a schematic interaction diagram of a method for discovering an edge service according to an embodiment of this application. A first network element determines a same application server address for terminal devices in a same terminal group.

In this application, terminal devices accessing a same application server, terminal devices accessing a same service, or terminal devices that access a same application server corresponding to a same service may be referred to as a terminal group, or may be referred to as a terminal set, a terminal device group, a terminal device set, or a UE group. It may be understood that the terminal group may be a real group, and the terminal group includes at least one terminal device, for example, all terminal devices in the terminal group access a same service; or the terminal group may be a virtual group, that is, the terminal group herein refers to one or more terminal devices accessing a same service, and a real group does not exist, but because the one or more terminal devices all access the same service, the terminal devices are considered as the terminal group.

S301: The first network element receives first information, and correspondingly, a fourth network element sends the first information, where the first information includes first service information.

In this application, the first network element may be an SMF network element, the fourth network element may be a PCF network element, and a second network element may be an EASDF network.

In this application, a service may also be referred to as an application, an application service, or the like. Correspondingly, service information may also be referred to as application information, application service information, or the like. This is not limited in this application.

Optionally, the service information may be a full qualified domain name (full qualified domain name, FQDN), or may be an application identifier (application ID), or an internet protocol (internet protocol, IP) 5-tuple, namely, a source IP address, a source port, a destination IP address, a destination port, and a transport layer protocol. This is not limited in this application.

In a possible implementation, the first information may further include first identification information. The first identification information indicates a terminal device that accesses a same application server as a first terminal device, which may also be understood as that the first identification information indicates terminal devices that access a same application server, that is, terminal devices that access a same application server correspond to a same first identifier; or understood as that terminal devices that access a same application server corresponding to a same service correspond to a same first identifier; or understood as that each terminal device in the terminal group corresponds to the identifier. The fourth network element may set an identifier for the terminal group, that is, each terminal device in the terminal group corresponds to the identifier. The terminal devices corresponding to the same first identification information need to use the same application server when accessing the same service.

Optionally, the application server may be an edge application server, and the application server address may be an edge application server address.

Optionally, the first identification information may be the ID of the terminal group, or may be a list of the terminal devices. This is not limited in this application.

Optionally, terminal devices in a same location area need to use the same application server when accessing the same service. The location area may be a city area or a geographical shape in a geographical area, or may be a specific longitude and latitude range. For example, in a range from 31°15" to 31°21" north latitude and from 118°22" to 118°26" east longitude, the terminal devices accessing the same service should be connected to the same application server. This is not limited in this application.

In a possible implementation, the first information may further include first indication information. The first indication information indicates to determine the same application server for the terminal devices, which may also be understood as that the first indication information indicates to determine the same application server for the terminal devices accessing the same service, or may be understood that the first indication information indicates to determine the same application server for the terminal devices, or may be understood that the first indication information indicates to determine the same application server for the terminal devices that access the same service and that correspond to the same first identification information, or may be understood as that the first indication information indicates to determine the same application server for the terminal devices that access the service corresponding to the first service information.

Optionally, the first indication information may be implicitly carried in the first information. For example, a message name is used to implicitly indicate that the same application server is determined for the terminal devices that access the same service.

In a possible implementation, the first information may further include first application server address information, and the first network element may select the application server address for each terminal device in the terminal group.

Optionally, the first service information, the first identification information, the first indication information, and the first application server address information may not be included in the first information for sending together, and may be separately sent by the fourth network element. This is not limited in this application.

S302: The first network element receives second information, and correspondingly, the second network element sends the second information, where the second information includes first domain name information, the first domain name information is included in first domain name system DNS query request information sent by the first terminal device, and the first DNS query request information is used to request application server address information corresponding to the first domain name information.

That the first domain name information is included in the first domain name system DNS query request information sent by the first terminal device is that the first domain name information is domain name information carried in the first DNS query request information sent by the first terminal device.

In a possible implementation, the first terminal device sends the first DNS query request information to the second network element, where the first DNS query request information includes the first domain name information, and the second network element sends the second information including the first domain name information to the first network element.

Optionally, the first domain name information may be an FQDN of a service accessed by the first terminal device.

S303: When the first domain name information corresponds to the first service information, the first network element determines, for the first terminal device, an application server that is the same as that of a second terminal device, where the second terminal device and the first terminal device access a same service.

Optionally, that the first domain name information corresponds to the first service information may be that the first service information includes the first domain name information. For example, the first domain name information includes an FQDN 1, and the first service information may include the FQDN 1, an FQDN 2, and the like. In this case, the first domain name information corresponds to the first service information.

Optionally, that the first domain name information corresponds to the first service information may be that the first service information is the first domain name information. For example, if the first domain name information is an FQDN 1, the first service information is the FQDN 1. In this case, the first domain name information corresponds to the first service information.

Optionally, that the first domain name information corresponds to the first service information may be that a service corresponding to the first domain name information belongs to a service included in the first service information. For example, the first domain name information includes an FQDN 1, the FQDN 1 is a domain name of a service 1, the first service information includes an application ID-1 and an application ID-2, and the application ID-1 is an ID of the service 1. In this case, the first domain name information corresponds to the first service information.

In a possible implementation, the first network element determines, for the first terminal device based on the first identification information, the application server that is the same as that of the second terminal device, where the first terminal device and the second terminal device correspond to the first identification information. That is, the first terminal device and the second terminal device correspond to the same first identification information, or the first network element may determine a same application server for terminal devices corresponding to the first identification information. In a possible implementation, the first network element determines, for the first terminal device based on the first indication information, the application server that is the same as that of the second terminal device.

That the first network element determines, for the first terminal device based on the first indication information, the application server that is the same as that of the second terminal device may be that the first network element determines, based on the first indication information, the same application server for the terminal devices, or the first network element determines, based on the first indication information, the same application server for the terminal devices accessing the same service, or the first network element determines, based on the first indication information, the same application server for the terminal devices that access the same service and that correspond to the same identification information, or the first network element determines, based on the first indication information, the same application server for the terminal devices that access the service corresponding to the first service information.

The second terminal device and the first terminal device belong to the same terminal group, and the second terminal device may be one or more terminal devices.

S304: The first network element sends a first rule, and correspondingly, the second network element receives the first rule, where the first rule includes the first application server address information, the first application server address information indicates the same application server, and the first rule indicates the second network element to send the first application server address information to the first terminal device, that is, the second network element sends the first application server address information to the first terminal device according to the first rule.

That the first application server address information indicates the same application server may be that the first application server address information is an address corresponding to the same application server, or that the first application server address information indicates an address corresponding to the same application server.

In a possible implementation, the first application server address information is included in the first information sent by the fourth network element to the first network element, and the first network element directly selects the address for each terminal device in the terminal group.

In a possible implementation, the first network element stores the first application server address information, and provides the first application server address information for each terminal device in the terminal group.

In a possible implementation, a third network element stores the first application server address information, and provides the first application server address information to the first network element.

In this application, the third network element may be a unified data repository (unified data repository, UDR) function network element, a UDM network element, or another network element. This is not limited herein.

Optionally, before the first network element sends the first rule, the method further includes: The first network element receives fourth information, and correspondingly, the third network element sends the fourth information, where the fourth information includes the first application server address information, and the third network element may actively send the first application server address information to the first network element.

Optionally, before the first network element receives the fourth information, the method further includes: The first network element sends fifth information, where the fifth information is used to obtain the application server address information corresponding to the first domain name information, and the third network element sends the first application server address information after receiving a request, of obtaining the application server address information, from the first network element.

That the fifth information is used to obtain the application server address information corresponding to the first domain name information may also be that the fifth information is used to obtain application server address information corresponding to a terminal device that accesses the first domain name information, or the fifth information is used to obtain application server address information corresponding to a terminal device group that accesses the first domain name information.

In a possible implementation, if neither the third network element nor the first network element stores the first application server address information, a DNS message is used to query the application server address corresponding to the terminal group.

The first network element sends a second rule, and correspondingly, the second network element receives the second rule, where the second rule includes first option information, and the first option information is used by a DNS server to determine application server address information. More specifically, the DNS server determines the application server address information based on a first option corresponding to the first option information, namely, a first ECS option. The second rule indicates the second network element to send second DNS query request information to the DNS server, and the second network element sends the second DNS query request information to the DNS server according to the second rule, where the second DNS query request information includes the first option information and the first domain name information. More specifically, the second DNS query request information includes the first domain name information and the first ECS option generated based on the first option information. The first option information includes location information of the terminal device, for example, IP address information, IP address information of UE for accessing a network, or UE IP address information. The DNS server obtains one or more corresponding application server addresses through querying based on the first domain name information and the first option information. More specifically, the DNS server obtains the one or more corresponding application server addresses through querying based on the first domain name information and the first ECS option corresponding to the first option information, and sends the addresses to the second network element. The second network element sends third information to the first network element, and correspondingly, the first network element receives the third information, where the third information includes the first domain name information and the one or more pieces of application server address information.

In this application, the first option information may be first ECS option information, and the second option information may be second ECS option information.

In a possible implementation, the terminal devices in the terminal group are connected to the same first network element, and the first network element determines one piece of application server address information, namely, the first application server address information, for the terminal device from the one or more pieces of application server address information, and provides the first application server address information for the terminal devices in the terminal group.

In a possible implementation, the terminal devices in the terminal group are connected to different first network elements. The first network element determines one piece of application server address information, namely, second application server address information, for the terminal device from the one or more pieces of application server address information, and sends first request information; and correspondingly, the third network element receives the first request information, where the first request information includes the second application server address information.

In a possible implementation, the first network element receives first response information responding to the first request information, and correspondingly, the third network element sends the first response information, where the first response information includes the first application server address information. When there are a plurality of first network elements, the first network elements may select different application server addresses from the application server address information obtained by the DNS server through querying, and the third network element performs coordination, so that the first network elements select the same application server for the terminal devices in the terminal group.

Optionally, the second application server address information and the first application server address information correspond to the same application server. When there are a plurality of first network elements, the first network elements may select the same application server addresses from the application server address information obtained by the DNS server through querying. That is, a second application server address is a first application server address. That the third network element sends the first application server address information to the first network element is equivalent to that the third network element determines that application server addresses determined by the first network element for the terminal devices in the terminal group are the same.

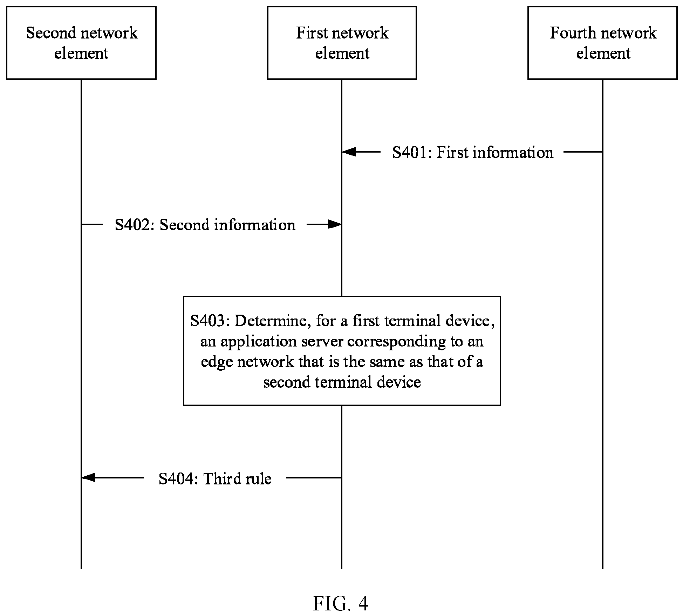

When the plurality of terminal devices access the same service, connecting the terminal devices to the same application server can reduce an interaction delay between the plurality of terminal devices. In addition, connecting the terminal devices to an application server in a same edge network can also reduce an interaction delay. FIG. 4 is a schematic interaction diagram of another method for discovering an edge service according to an embodiment of this application. A first network element determines an application server address in a same edge network for terminal devices in a same terminal group.

In this application, terminal devices that access an application server in the same edge network corresponding to a same service, or terminal devices that access an application server in the same edge network, or terminal devices accessing a same service may be referred to as a terminal group, or may have another name such as a terminal set, a terminal device group, a terminal device set, or a UE group. This is not limited in this application. Similarly, the terminal group may be a real group, or may be a virtual group. For example, all terminal devices in the terminal group access a same service. The terminal group may be a virtual group, that is, the terminal group herein refers to one or more terminal devices accessing a same service, and a real group does not exist, but because the one or more terminal devices all access the same service, the terminal devices are considered as the terminal group.

In this application, an application server in a same edge network may be understood as an application server corresponding to a same edge network, or may be understood as an application server associated with a same data network access identifier DNAI, or an application server corresponding to a same DNAI, or an application server in an edge network corresponding to a same DNAI; or may be understood as an application server associated with a same LDN, or an application server corresponding to a same LDN, or an application server in an edge network corresponding to a same LDN. Similarly, an application server address in a same edge network may be an application server address associated with a same DNAI, or an application server address corresponding to a same DNAI, or an application server address in an edge network corresponding to a same DNAI, or an application server address associated with a same LDN, or an application server address corresponding to a same LDN, or an application server address in an edge network corresponding to a same LDN; or understood as an application server address corresponding to a same edge network.

In this application, the edge network may be an edge network corresponding to a data network access identifier, or an edge part of a data network, or a local network, or an edge part of a data network, or a local part of a data network, or an edge part of a data network corresponding to a data network access identifier; or may be a data network access identifier. The same edge network may also be a same data network access identifier. Edge network information may be a name of the edge network, or may be data network access identifier information. Determining the edge network for the terminal device may also be determining the data network access identifier information for the terminal device. A determined edge network may also be determined data network access identifier information, or may be an edge network corresponding to the determined data network access identifier information.

S401: The first network element receives first information, and correspondingly, a fourth network element sends the first information, where the first information includes first service information.

In a possible implementation, the first information may further include third identification information. The third identification information indicates a terminal device that accesses an application server in an edge network that is the same as that of a first terminal device, which may also be understood as that the third identification information indicates terminal devices that access an application server in a same edge network, that is, terminal devices that access the application server in the same edge network correspond to the same third identification information; or understood as that terminal devices that access an application server in a same edge network corresponding to a same service correspond to the same third identification information; or understood as that each terminal device in the terminal group corresponds to the third identification information. The terminal devices corresponding to the same third identification information need to use the same application server when accessing the same service.

In a possible implementation, the first information may further include second indication information. That the second indication information indicates to determine the application server in the same edge network for the terminal devices that access the same service may also be understood as that the second indication information indicates to determine the application server in the same edge network for the terminal devices, or may be understood as that the second indication information indicates to determine the application server in the same edge network for the terminal devices that access the same service and that correspond to the same third identification information, or may be understood as that the second indication information indicates to determine the application server in the same edge network for the terminal devices that access a service corresponding to the first service information.

In a possible implementation, the first information may further include second identification information and/or second option information, where the second identification information indicates the same edge network accessed by the terminal group, or the second identification information is a data network access identifier, and the second option information is used to determine an application server corresponding to a same data network access identifier for the terminal devices accessing the same service, which may also be understood as that the second option information is used to determine the application server in the same edge network for the terminal devices that access the same service.

In a possible implementation, the first information may further include a first name and/or second option information, where the first name indicates a same edge network accessed by the terminal group, or the first name is a name of a local data network.

S402: The first network element receives second information, and correspondingly, a second network element sends the second information, where the second information includes first domain name information, and the first domain name information is included in first domain name system DNS query request information sent by the first terminal device, that is, the first domain name information is domain name information queried by the first terminal device by using the first domain name system DNS query request information, and the first DNS query request information is used to request application server address information corresponding to the first domain name information.

Content in this step is similar to content described in step S302. To avoid repetition, details are not described herein again.

S403: When the first domain name information corresponds to the first service information, the first network element determines, for the first terminal device, an edge network that is the same as that of a second terminal device, where the second terminal device and the first terminal device access a same service.

In a possible implementation, the first network element determines, for the first terminal device based on the third identification information, the application server in the edge network that is the same as that of the second terminal device, where the first terminal device and the second terminal device correspond to the third identification information, or the first network element may determine the application server in the same edge network for all terminal devices corresponding to the third identification information.

That the first network element determines, for the first terminal device based on the second indication information, the application server in the edge network that is the same as that of the second terminal device may be that the first network element determines, based on the second indication information, the application server in the same edge network for the terminal devices, or the first network element determines, based on the second indication information, the application server in the same edge network for the terminal devices accessing the same service, or the first network element determines, based on the second indication information, the application server in the same edge network for the terminal devices that access the same service and that correspond to the same identification information, or the first network element determines, based on the second indication information, the application server in the same edge network for the terminal devices that access the service corresponding to the first service information.

For understanding of content about a case in which the first domain name information corresponds to the first service information, refer to step S303.

S404: The first network element sends a third rule, and correspondingly, the second network element receives the third rule, where the third rule includes second option information, and the second option information is used by a DNS server to determine application server address information.

In a possible implementation, the second option information is determined by the first network element based on second identification information, where the second identification information indicates the same edge network; or the second option information is determined by the first network element based on a first name, where the first name indicates the same edge network.

The first network element first determines the same edge network for all the terminal devices in the terminal group, which may be understood as determining a same data network access identifier or local data network name for all the terminal devices in the terminal group, that is, determining the second identification information or the first name, and selecting the second option information corresponding to the second identification information or the first name. The second option information is related to location information of the terminal device. For example, the second option information includes IP address information, or UE IP address information, or IP address information of a network accessed by UE. The first network element sends the third rule including the second option information to the second network element, and the second network element sends the second option information and the first domain name information to the DNS server. More specifically, the second network element sends, to the DNS server, the first domain name information and a second option, namely, a second ECS option generated based on the second option information, so that the DNS server queries a corresponding application server address. It should be understood that the first network element may determine same second option information or different second option information for the terminal devices in the terminal group.

In a possible implementation, the second identification information or the first name is included in the first information sent by the fourth network element to the first network element, and the first network element directly selects the second identification information or the first name.

In a possible implementation, the second option information is included in first information sent by the fourth network element to the first network element, and the first network element directly selects the second option information.

In a possible implementation, the first network element stores the second identification information or the first name, and selects the second identification information or the first name.

In a possible implementation, the first network element stores the second option information, and selects the second option information.

In a possible implementation, a third network element stores the second identification information or the first name, and provides the second identification information or the first name for the first network element.

Before the first network element sends the third rule, the method further includes: The first network element receives sixth information; and correspondingly, the third network element sends the sixth information, where the sixth information includes the second identification information. The third network element may actively send the second identification information to the first network element.

Optionally, before the first network element sends the third rule, the method further includes: The first network element receives sixth information; and correspondingly, the third network element sends the sixth information, where the sixth information includes the first name. The third network element may actively send the first name to the first network element.

Optionally, before the first network element receives the sixth information, the first network element sends seventh information, and correspondingly, the third network element receives the seventh information, where the seventh information is used to obtain edge network information corresponding to the first domain name information. The third network element may send the second identification information or the first name after receiving request information for obtaining the edge network information from the first network element.

In a possible implementation, if neither the third network element nor the first network element stores the second identification information and the first name, the first network element determines the second identification information or the first name based on a service corresponding to location information of the first terminal device or the first domain name information. If the terminal devices in the terminal group are connected to different first network elements, the first network element determines the edge network for the first terminal device. That is, after determining the second identification information or the first name, the first network element needs to send the second identification information or the first name to the third network element, and the third network element coordinates and confirms that edge networks determined by the first network elements for the terminal devices in the terminal group are the same, which may also be understood as that the third network element coordinates and confirms that each first network element determines the same data network access identifier or local data network name for each terminal device in the terminal group.

Specifically, the first network element sends second request information, and correspondingly, the third network element receives the second request information, where the second request information includes the second identification information. The first network element receives second response information responding to the third request information, where the second response information includes fourth identification information, and the fourth identification information indicates an edge network determined by the third network element. If the fourth identification information returned by the third network element is different from the edge network, corresponding to the second identification information, determined by the second network element, the first network element needs to reselect an edge network until an edge network selected by the first network element is the same as the edge network returned by the third network element, that is, the fourth identification information and the second identification information correspond to the same edge network.

After the first network element finally determines the edge network, the first network element sends a fourth rule, and correspondingly, the second network element receives the fourth rule, where the fourth rule includes first application server address information, the first application server address information indicates an application server, in the edge network, corresponding to the second identification information, and the fourth rule indicates the second network element to send the first application server address information to the first terminal device.

The first network element selects an application server address from the same edge network determined for the terminal group, that is, the edge network corresponding to the second identification information, and sends the application server address to the second network element by using the fourth rule. The second network element sends the application server address to the terminal device, so that each terminal device in the same terminal group can be connected to the application server in the same edge network. This reduces an interaction delay between the plurality of terminal devices.

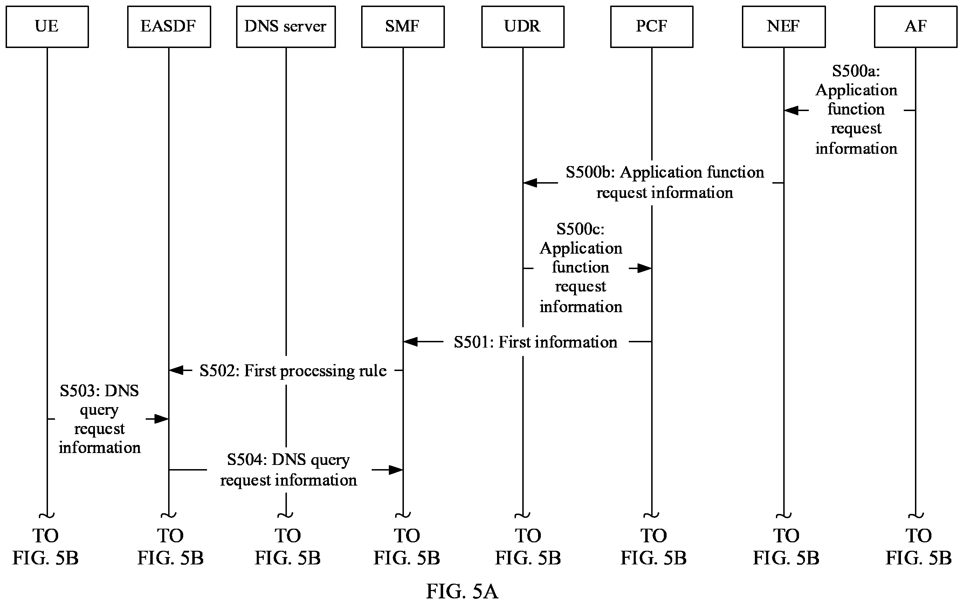

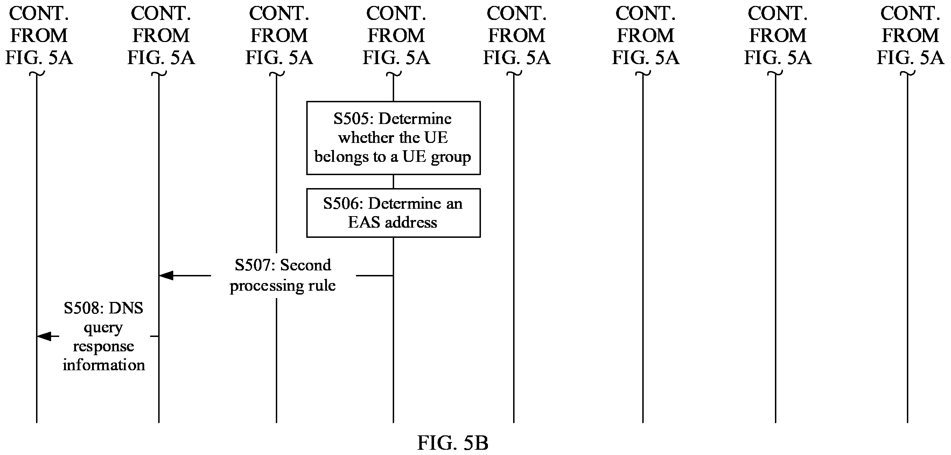

FIG. 5A and FIG. 5B are a schematic interaction diagram of still another method for discovering an edge service according to an embodiment of this application. A PCF network element may directly determine a corresponding EAS address for a UE group, and send the EAS address to an SMF network element. The SMF network element provides the EAS address for each UE in the same UE group, so that each UE in the UE group is connected to a same EAS.

S500: The PCF network element receives application function request information from an AF network element.

Optionally, step S500 may include steps S500a, S500b, and S500c. To be specific, the PCF network element may directly receive the application function request information from the AF network element; or the AF network element may first send the application function request information to an NEF network element, and then the NEF network element sends the application function request information to the PCF network element; or the AF network element may first send the application function request information to the NEF network element, then the NEF network element sends the application function request information to a UDR network element, and then the UDR network element sends the application function request information to the PCF network element.

The application function request information includes service information. The service information may also be referred to as first service information. The service information may indicate a service accessed by the UE group. The service information may include an FQDN or identification information of an application. The identification information of the application may include an ID, an identity code, group information, or the like of the application. This is not limited in this application. The application function request information may be used to control routing of a service traffic.

Optionally, the application function request information may further include location area information. The location area information may indicate location area information corresponding to the UE group, which may be understood as that UE that is located in the location area and that accesses the service corresponding to the service information belongs to the same UE group. For example, the location area information may be location area information or geographical location area information.

Optionally, the application function request information may further include UE group identification information. Terminal devices belonging to the same UE group correspond to the same UE group identification information. The UE group identification information may also be referred to as first identification information, or referred to as a UE association identifier.

Optionally, the application function request information may further include a UE list. The UE list may include one or more pieces of UE ID information. The UE ID information is UE identification information indicating specific UE included in the UE group, or the UE list may be referred to as UE information or UE identification information. When the application function request information includes both the UE group identification information and the UE list, it means that the UE group identification information corresponds to the UE in the UE list, or it may be understood as that the UE group identification information is specified for the UE in the UE list.

Optionally, the application function request information may further include first indication information. The first indication information indicates to select the same EAS for the UE belonging to the same UE group, which may also be understood as that the first indication information indicates to determine a same application server for terminal devices, or may be understood as that the first indication information indicates to determine a same application server for terminal devices accessing a same service, or may be understood as that the first indication information indicates to determine a same application server for terminal devices, or may be understood as that the first indication information indicates to determine a same application server for terminal devices accessing a same service and that correspond to the same first identification information, or may be understood as that the first indication information indicates to determine a same application server for terminal devices that access a service corresponding to first service information.

Optionally, the first indication information or second indication information may be implicitly carried in first information. For example, a message name is used to implicitly carry the first indication information.

Optionally, the application function request information may further include EAS address information, where the EAS address information is used to determine an address of the EAS connected to the UE group.

S501: The SMF network element receives the first information from the PCF network element.

The PCF network element generates the first information based on the application function request information, and sends the first information to the SMF network element.

Correspondingly, the PCF network element generates service information in the first information based on service information in the application function request information. The service information may also be referred to as first service information. The service information indicates the service accessed by the UE group. The service information may include an FQDN or identification information of an application. The identification information of the application may include an ID, an identity code, group information, or the like of the application. This is not limited in this application.

Optionally, when the application function request information includes the location area information, the PCF network element generates the first information for the UE in the location area. The UE that is located in the location area and that accesses the service corresponding to the service information belongs to the same UE group. The first information includes the location area information of the UE group. For example, the location area information may be location area information or geographic location area information.

Optionally, when the application function request information includes the UE group identification information, the PCF network element generates UE group identification information in the first information based on the UE group identification information in the application function request information. The terminal devices belonging to the same UE group correspond to a same UE group identifier, and the UE group identifier may be the first identification information.

Optionally, when the application function request information includes the UE list, the PCF generates the first information for the UE included in the UE list. The first information includes a UE list, the UE list may include one or more pieces of UE ID information, and the UE list indicates specific UE included in the UE group.

This application merely shows an example of grouping the UE group based on a geographical location, a group identifier, a UE list, and the like, but should not limit a specific grouping manner of the UE group.

Optionally, when the application function request information includes the first indication information, the PCF network element generates the first information for the UE in the UE group based on the first indication information, and generates first indication information in the first information based on the first indication information in the application function request information. The first indication information indicates the SMF network element to select the same EAS address for each UE belonging to the same UE group.

Optionally, the first indication information may be implicitly carried in the first information. For example, a message name is used to implicitly carry the first indication information.

Optionally, when the application function request information includes the EAS address information, the PCF network element generates EAS address information in the first information based on the EAS address information in the application function request information. That is, the first information may further include the EAS address information, so that the SMF network element directly selects the EAS address and provides the EAS address for the UE.

Optionally, the service information, the UE group identification information, the UE list, the location area information of the UE group, the first indication information, and the EAS address information may not be included in the first information, but are separately sent.

S502: The SMF network element sends a first processing rule to an EASDF network element.

The SMF network element sends the first processing rule to the EASDF network element, where the first processing rule includes an FQDN of a service accessed by the UE and a processing rule. When determining that an FQDN included in a DNS query request information from the UE corresponds to the FQDN in the first processing rule, the EASDF network element reports, according to the processing rule, content corresponding to the DNS query request information, for example, the FQDN in the DNS query request information.

S503: The UE sends the DNS query request information to the EASDF network element.

The DNS query request information includes the FQDN of the service to be queried by the UE.

S504: The EASDF network element sends, to the SMF network element, information corresponding to the DNS query request information.

If the EASDF determines that the FQDN carried in the DNS query request information corresponds to the FQDN in the first rule, the EASDF network element reports, to the SMF network element according to the first rule, content corresponding to the DNS query request information, for example, the FQDN in the DNS query request information.

S505: The SMF network element determines whether the UE belongs to the UE group.

The SMF determines, based on the first information, whether the UE belongs to the UE group.

In a possible implementation, the SMF network element determines, based on the FQDN carried in the DNS query request information, whether the UE belongs to the UE group, and if the FQDN corresponds to the service information in the first information, determines that the UE belongs to the UE group. That the FQDN corresponds to the service information in the first information may be understood as that the FQDN is included in the service information, or that the FQDN corresponds to the service information in the first information may be understood as that a service corresponding to the FQDN belongs to a service included in the service information. For example, if first domain name information includes an FQDN 1, and the service information includes an FQDN 1, an FQDN 2, and the like, the first domain name information corresponds to the service information; or if the first domain name information includes an FQDN 1, the FQDN 1 is a domain name of a service 1, the service information includes an application ID-1 and an application ID-2, and the application ID-1 is an ID of a service 1, the first domain name information corresponds to the service information.

In a possible implementation, each UE in the UE group corresponds to the same UE group identifier. The SMF network element determines, for the UE based on the UE group identifier, the EAS that is the same as that of another UE in the UE group. The SMF network element may determine the same EAS for each UE corresponding to the UE group identifier.

In a possible implementation, each UE in the UE group is located in the same location area. The SMF network element determines, for the UE based on the location area information of the UE group, the EAS that is the same as that of others in the UE group. The SMF network element may determine the same EAS for each UE corresponding to the same location area.

S506: The SMF network element determines an EAS address for the UE.

If determining that the UE belongs to the UE group, the SMF network element determines, for the UE, the EAS address that is the same as that of another UE in the UE group.

Optionally, the determined EAS address may be the EAS address carried in the first information.

Optionally, the determined EAS address may also be the EAS address that corresponds to the UE group and that is prestored by the SMF network element.

S507: The SMF network element sends a second processing rule to the EASDF network element.

The second processing rule includes the EAS address and a processing rule. The second processing rule may also be referred to as a first rule. The EAS address is the EAS address determined by the SMF network element. The processing rule indicates the EASDF network element to send the EAS address to the UE.

S508: The EASDF network element sends a DNS query response information to the UE.

The EASDF network element sends the EAS address to the UE according to the second processing rule. The EAS address may be included in the DNS query response information sent by the EASDF network element.

The UE belonging to the same UE group may be connected to the same SMF network element, or may be connected to different SMF network elements. If the UE is connected to different SMF network elements, each SMF selects the EAS address carried in the first information for the UE belonging to the same UE group, so that each UE in the UE group is connected to the same EAS. This reduces an interaction delay between the multiple UE.

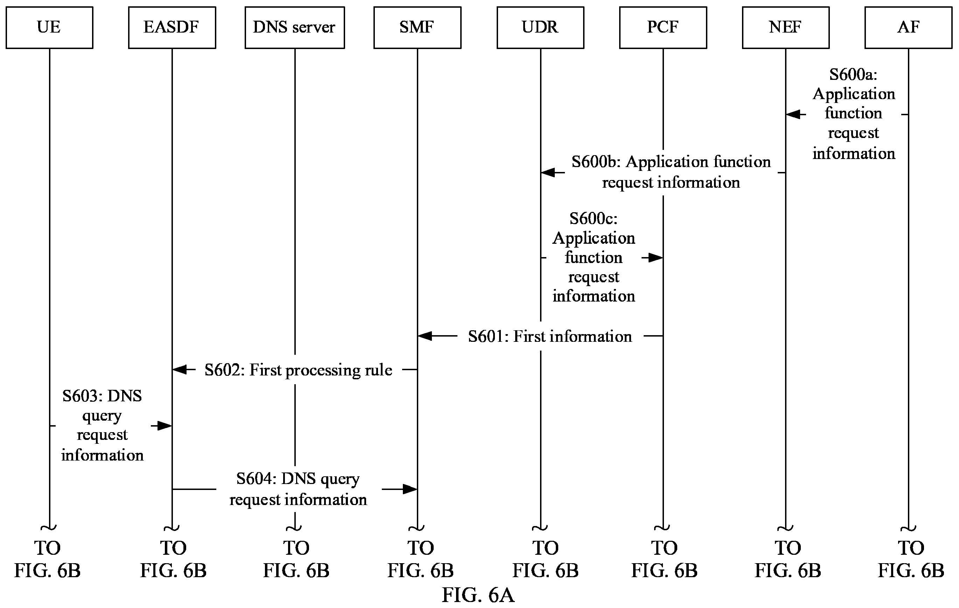

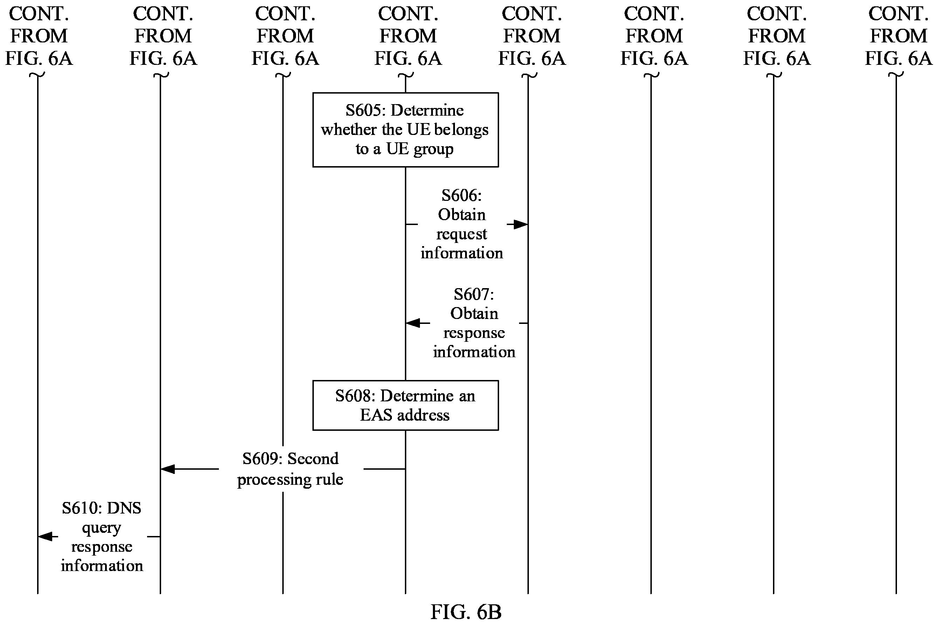

FIG. 6A and FIG. 6B show yet another method for discovering an edge service according to an embodiment of this application. A UDR network element may store an EAS address corresponding to a UE group and send the EAS address to an SMF network element, and the SMF network element provides the EAS address for each UE belonging to the UE group, so that each UE in the UE group is connected to a same EAS. In this application, that the UDR network element stores the EAS address corresponding to the UE group and coordinates a plurality of SMFs to select the same EAS for the UE group is merely an example. Alternatively, the UDR network element may be replaced by another network element. This is not limited herein.

As shown in FIG. 6A and FIG. 6B, steps S600 to S605 are respectively similar to steps S500 to S505 described in FIG. 5A and FIG. 5B. To avoid repetition, details are not described herein again. In step S601, first information may not include the EAS address.

S606: The SMF network element sends obtaining request information to the UDR network element.

In a possible implementation, if the SMF network element does not store the EAS address of a service corresponding to the UE group, a PCF network element does not provide the corresponding EAS address, and the UDR network element stores the EAS address corresponding to the UE group, the SMF network element may send the obtaining request information to the UDR network element, to request to obtain the EAS address of the service corresponding to the UE group, where the obtaining request information may include UE group information.

S607: The UDR network element sends obtaining response information to the SMF network element.

The obtaining response information includes the EAS address of the service corresponding to the UE group.

Optionally, the UDR network element may actively send the EAS address to the SMF network element, without being triggered by the obtaining request information to send the EAS address. In other words, step S606 may not exist, and step S607 is directly performed.

Steps S608 to S610 are respectively similar to steps S506 to S508 described in FIG. 5B. To avoid repetition, details are not described herein again.

Similarly, the UE belonging to the same UE group may be connected to a same SMF network element, or may be connected to different SMF network elements. The one or more SMFs select the EAS address provided by the UDR network element for each UE belonging to the same UE group, so that each UE in the UE group is connected to the same EAS. This reduces an interaction delay between multiple UE.

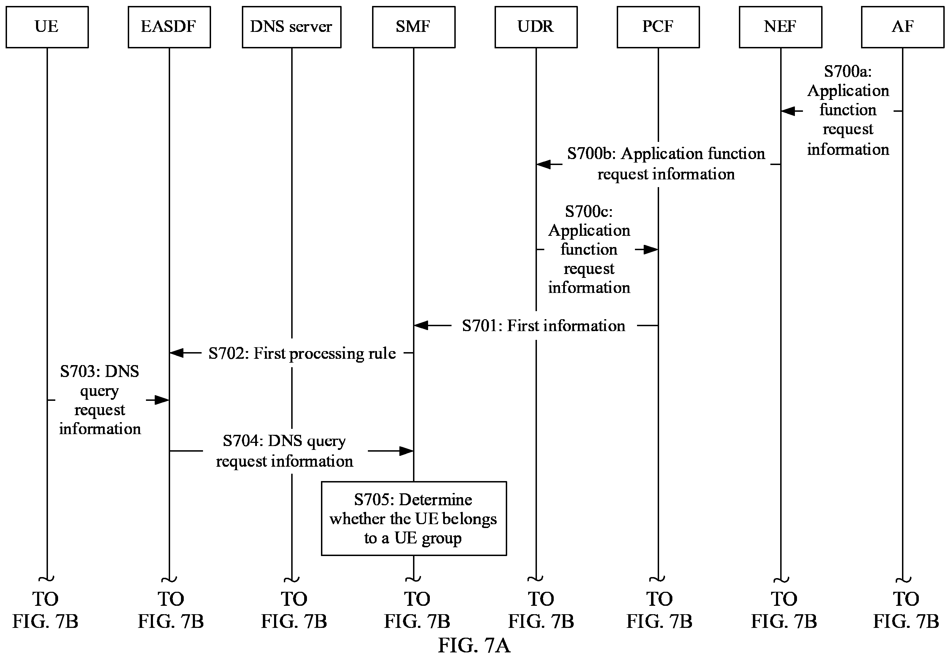

FIG. 7A to FIG. 7C show still yet another method for discovering an edge service according to an embodiment of this application. When neither an SMF network element nor a UDR network element stores an EAS address corresponding to a UE group, a DNS server may query the corresponding EAS address. If there are a plurality of SMF network elements, the UDR network element may perform coordination, so that each SMF network element determines a same EAS for each UE in the UE group.

Steps S700 to S707 are similar to steps S600 to S607 described in FIG. 6A and FIG. 6B. To avoid repetition, details are not described herein again. In step S707, obtaining response information may indicate that the UDR network element does not store the EAS address corresponding to the UE group.

S708: The SMF network element sends a third processing rule to an EASDF network element.

In a possible implementation, neither the SMF network element nor the UDR network element stores the EAS address corresponding to the UE group, and the SMF network element sends the third processing rule to the EASDF network element. The third processing rule may also be referred to as a second rule. The third processing rule includes ECS option information and a processing rule. The processing rule indicates the EASDF network element to add ECS option information to DNS query request information, and specifically, the processing rule indicates the EASDF network element to add, to the DNS query request information, an ECS option, namely, an ECS option, generated based on the ECS option information, and send the DNS query request information to the DNS server. The ECS option information includes location information of the UE, and the location information may be an IP address of a network accessed by the UE.

S709: The EASDF network element sends the DNS query request information to the DNS server.

In a possible implementation, the EASDF network element adds the ECS option information to the DNS query request information according to the third processing rule. Specifically, the processing rule indicates the EASDF network element to add, to the DNS query request information, the ECS option generated based on the ECS option information, and send the DNS query request information to the DNS server, where the DNS query request information includes an FQDN and an ECS option of the UE.

S710: The DNS server sends DNS query response information to the EASDF network element.

The DNS server queries the EAS address of a corresponding service based on the FQDN and ECS options, adds the EAS address to the DNS query response information, and sends the response information to the EASDF network element.

Optionally, there may be one or more EAS addresses.

S711: The EASDF network element sends, to the SMF network element, content corresponding to the DNS query response information.

The content corresponding to the DNS query response information may include the one or more EAS addresses.

Optionally, the DNS query response information may further include the FQDN of the service.

S712: The SMF network element selects the EAS address corresponding to the UE group.

The SMF network element selects one EAS address for the UE from the one or more EAS addresses. If each UE in the UE group is connected to the same SMF network element, the SMF network element selects the EAS address for each UE, and steps S713 and S714 do not need to be performed.

S713: The SMF network element sends update request information to the UDR network element.

In a possible implementation, if each UE in the UE group is connected to different SMF network elements, to prevent the SMF network elements from selecting different EAS addresses for the UE in the same UE group, the SMF network element may send the update request information to the UDR network element, and the UDR network element performs coordination and update, so that the SMF network element finally determines the same EAS address for the UE in the UE group. The update request information includes the EAS address determined by the SMF network element in step S712.

S714: The UDR network element sends update response information to the SMF network element.

After receiving the update request information from the SMF network element, the UDR network element determines an EAS accessed by first UE accessing an edge service in the UE group, and sends update response information to the SMF network element that subsequently sends an update request. The update response information includes the EAS address. Each SMF network element determines the EAS address for each UE. The EAS address determined by the SMF network element in step S712 may be the same as or different from the EAS address sent by the UDR network element.

Steps S715 and S716 are similar to steps S609 and S610 described in FIG. 6B. To avoid repetition, details are not described herein again.

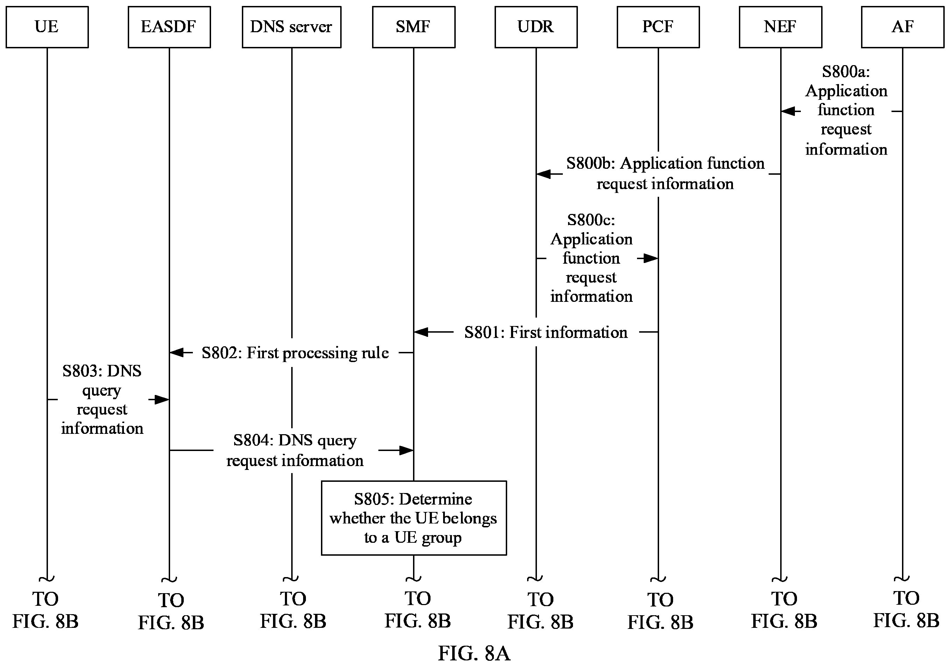

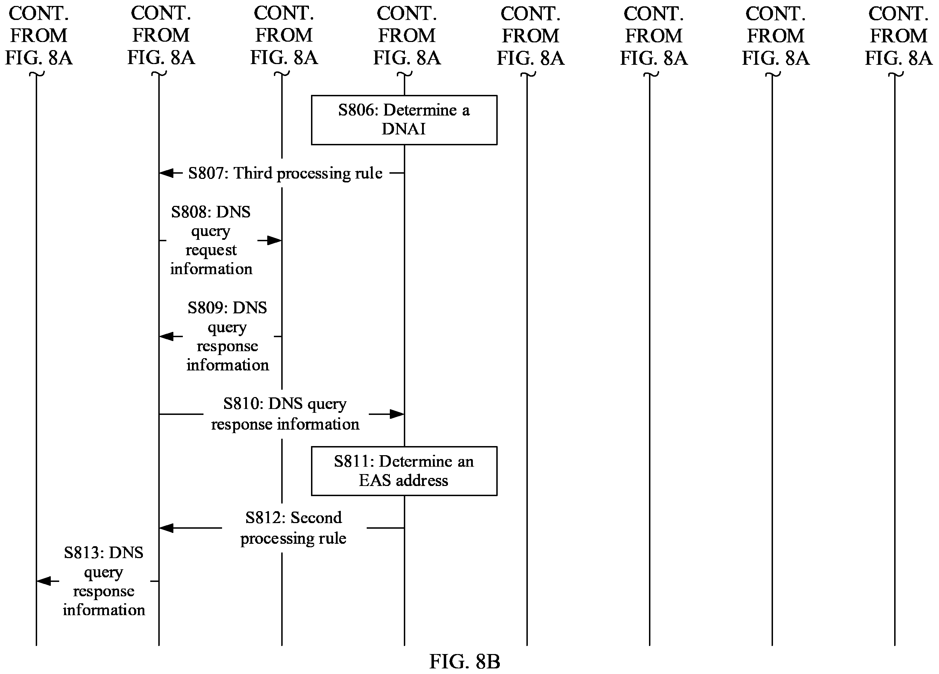

The methods described in FIG. 5A to FIG. 7C are that the SMF network element determines the same EAS address for each UE belonging to the same UE group. The methods described in FIG. 8A to FIG. 11C are that an SMF network element selects an EAS address in a same edge network for each UE belonging to the same UE group. As shown in FIG. 8A and FIG. 8B, a UDR network element forwards only application function request information, and does not need to store or coordinate a DNAI.

S800: A PCF network element receives the application function request information from an AF network element.

The application function request information includes service information. Optionally, the application function request information may further include location area information, UE group identification information, namely, third identification information, and a UE list. Content corresponding to the application function request information is similar to content described in step S500, and may include steps S800a, S800b, and S800c. To avoid repetition, details are not described herein again.

Optionally, the application function request information includes second indication information, and the second indication information is used to select the EAS in the same edge network for the UE belonging to the same UE group.

Optionally, the application function request information may further include ECS option information, the ECS option information is an ECS option corresponding to the UE group, and the ECS option information is used to determine an edge application server accessed by the UE in the UE group.

Optionally, the application function request information may further include the DNAI or LDN information corresponding to the UE group, where the DNAI may be second identification information, the LDN information may be a name of an LDN, and the DNAI or LDN information is used to determine the edge application server connected to the UE group in the corresponding edge network.

S801: The SMF network element receives first information from the PCF network element.

Correspondingly, step S801 is similar to step S501. To avoid repetition, details are not described herein again.

A difference is that when the application function request information includes the second indication information, the PCF network element generates the first information for the UE in the UE group based on the second indication information, and generates second indication information in the first information based on the second indication information in the application function request information. In other words, the second information includes the second indication information, and the second indication information indicates the SMF network element to select the EAS address corresponding to the same DNAI for each UE belonging to the same UE group, which may be understood as that the second indication information indicates to determine the application server in the same edge network for terminal devices accessing a same service, or may be understood as that the second indication information indicates to determine the application server in the same edge network for terminal devices, or may be understood as that the second indication information indicates to determine application servers in the same edge network for terminal devices that access the same service and correspond to the same third identification information, or may be understood as that the second indication information indicates to determine the application server in the same edge network for terminal devices that access a service corresponding to first service information.

Optionally, when the application function request information includes the ECS option information, the PCF network element generates ECS option information in the first information based on the ECS option information in the application function request information.

Optionally, when the application function request information includes the DNAI, the PCF network element generates a DNAI in the first information based on the DNAI in the application function request information.

Steps S802 to S805 are similar to steps S502 to S505 described in FIG. 5A and FIG. 5B. To avoid repetition, details are not described herein again.

S806: The SMF network element determines the DNAI.

In a possible implementation, if the first information includes the DNAI corresponding to the UE group, the determined DNAI is the DNAI in the first information, and the ECS option corresponding to the DNAI is selected.

In a possible implementation, if the first information includes the ECS option information corresponding to the UE group, the SMF network element does not need to determine the DNAI, and the SMF network element selects the ECS option for a DNS server to query the corresponding EAS address.

In a possible implementation, if the UE in the same UE group is connected to the same SMF network element, the SMF network element may determine the DNAI based on a location of the UE in the UE group, or determine the DNAI based on a service accessed by the UE, and the SMF network element may select the DNAI for each UE in the same UE group, and select the ECS option corresponding to the DNAI.

In a possible implementation, if the UE in the same UE group is connected to the same SMF network element, and the SMF stores the DNAI corresponding to the UE group, the SMF network element determines the DNAI for the UE in the UE group.

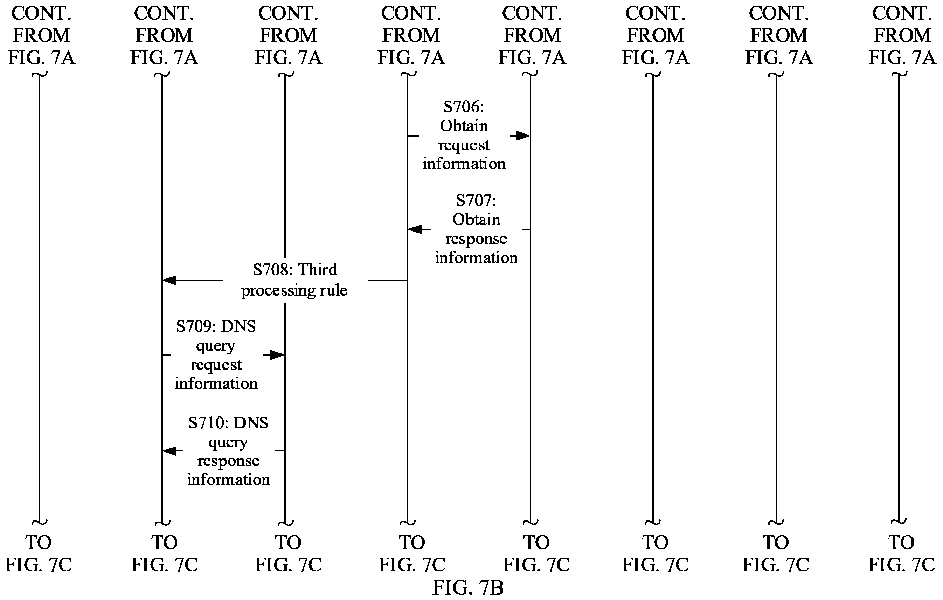

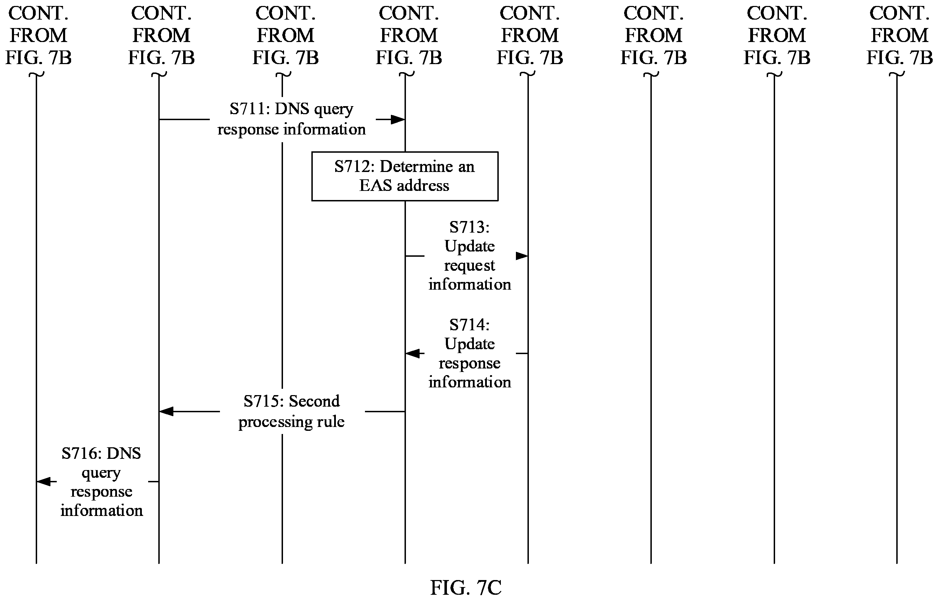

Steps S807 to S813 are respectively similar to steps S708 to S712 and S715 and S716 described in FIG. 7B and FIG. 7C. To avoid repetition, details are not described herein again.

In step S807, a third processing rule may also be referred to as a third rule. In step S812, a second processing rule may also be referred to as a fourth rule.

In this embodiment provided in this application, when the PCF network element provides the DNAI, the UE belonging to the same UE group may be connected to a same SMF network element, or may be connected to different SMF network elements. The one or more SMFs select, for the UE belonging to the same UE group, the EAS address in the edge network corresponding to the DNAI provided by the PCF network element. However, when the UE in the same UE group is connected to the same SMF network element, the PCF network element does not need to provide the DNAI or the ECS option information. The SMF network element selects the EAS address corresponding to the same DNAI from EAS addresses queried by the DNS, and provides the EAS address for the UE, so that each UE in the UE group is connected to the EAS in the edge network corresponding to the same DNAI. This reduces an interaction delay between multiple UE.

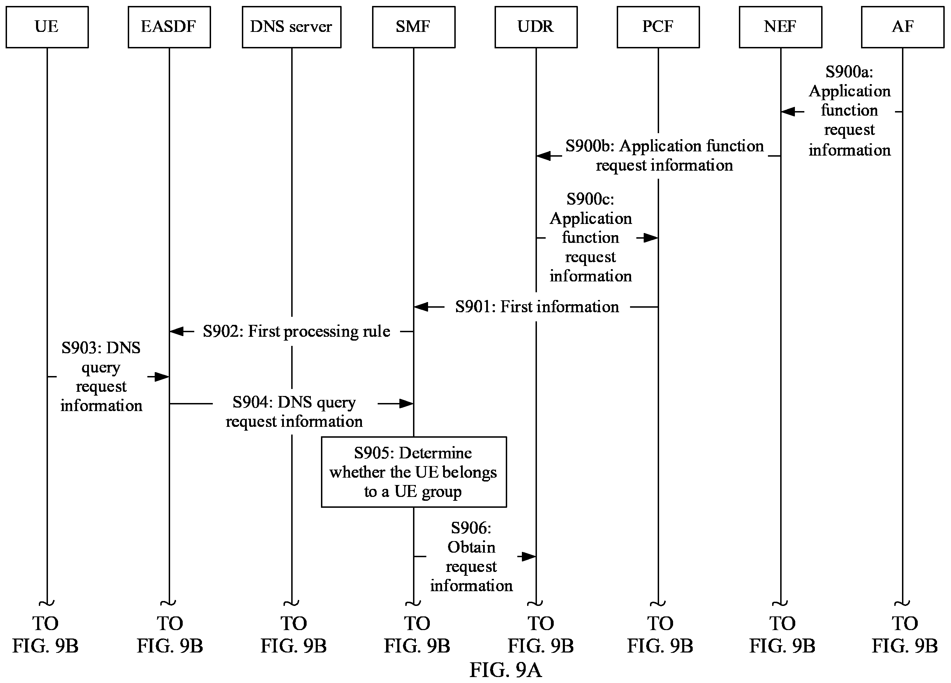

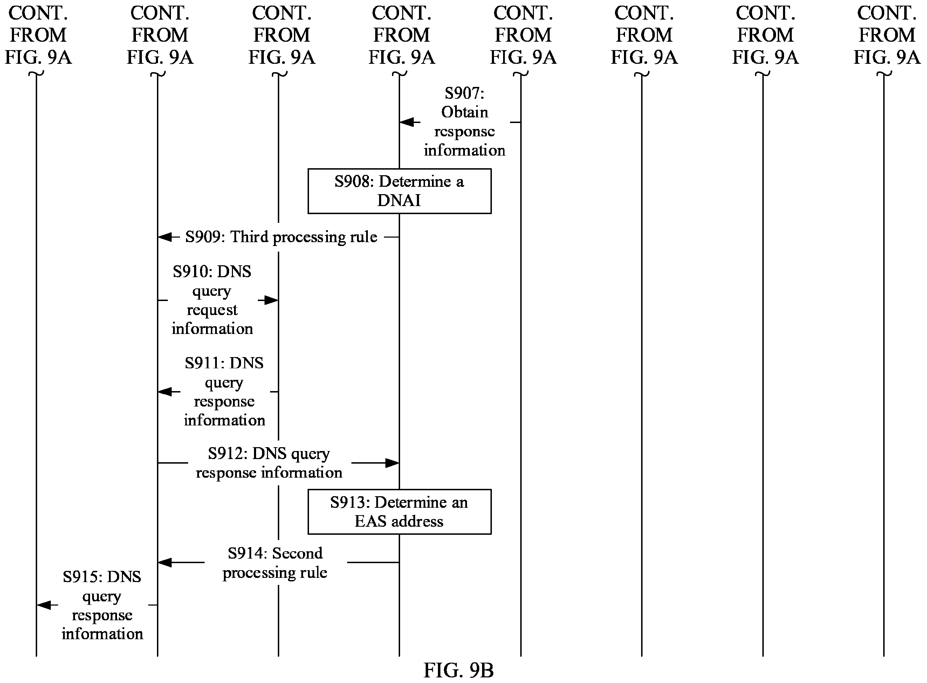

FIG. 9A and FIG. 9B are a schematic interaction diagram of a still further method for discovering an edge service according to an embodiment of this application. A UDR network element may store a DNAI corresponding to a UE group and send the DNAI to an SMF network element. The SMF network element selects an EAS address corresponding to the DNAI and provides the EAS address for each UE in a same UE group, so that each UE in the UE group is connected to an EAS in an edge network corresponding to the same DNAI.

Steps S900 to S905 are respectively similar to steps S800 to S805 described in FIG. 8A. Details are not described herein again.

Step S906: The SMF network element sends obtaining request information to the UDR network element.

Optionally, if the SMF network element does not store the DNAI of a service corresponding to the UE group, but the UDR network element stores the DNAI corresponding to the UE group, the SMF network element may send the obtaining request information to the UDR network element, to request to obtain the DNAI of the service corresponding to the UE group. The obtaining request information may further include UE group information.

S907: The UDR network element sends obtaining response information to the SMF network element.

The obtaining response information includes the DNAI of the service corresponding to the UE group.

Optionally, the UDR network element may actively send the DNAI to the SMF network element, without being triggered by the obtaining request information to send the DNAI. In other words, step S906 may not exist, and step S907 is directly performed.

S908: The SMF network element determines the DNAI.

The SMF network element determines, for the UE in the UE group, the DNAI provided by the UDR network element.

Steps S909 to S915 are respectively similar to steps S807 to S813 described in FIG. 8B. Details are not described herein again.

Similarly, the UE belonging to the same UE group may be connected to a same SMF network element, or may be connected to different SMF network elements. If the UE is connected to different SMF network elements, each SMF selects, for the UE belonging to the same UE group, an EAS address in the edge network corresponding to the DNAI provided by the UDR network element, so that each UE in the UE group is connected to the EAS in the edge network corresponding to the same DNAI. This reduces an interaction delay between multiple UE.

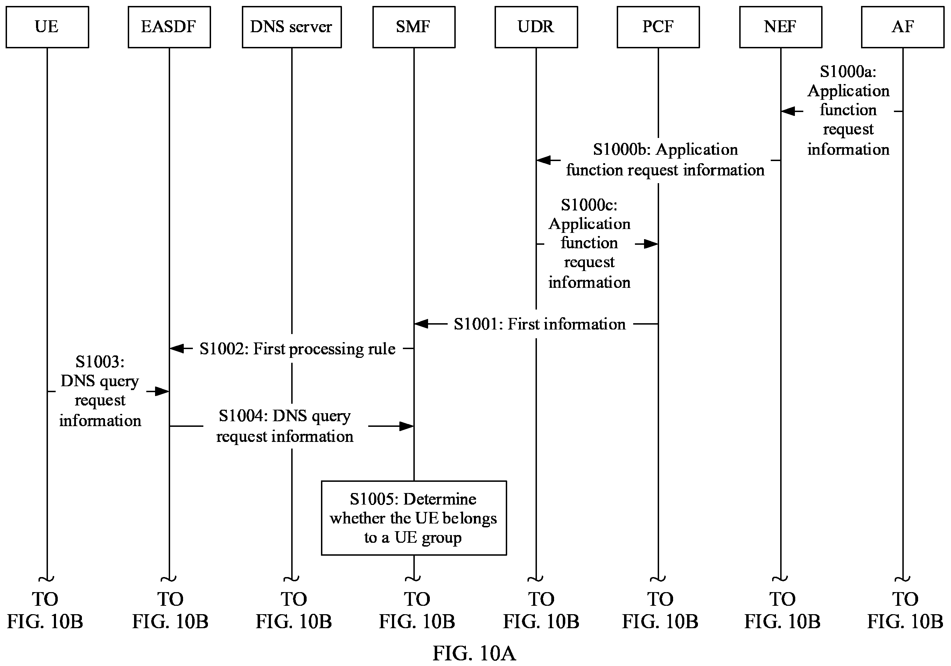

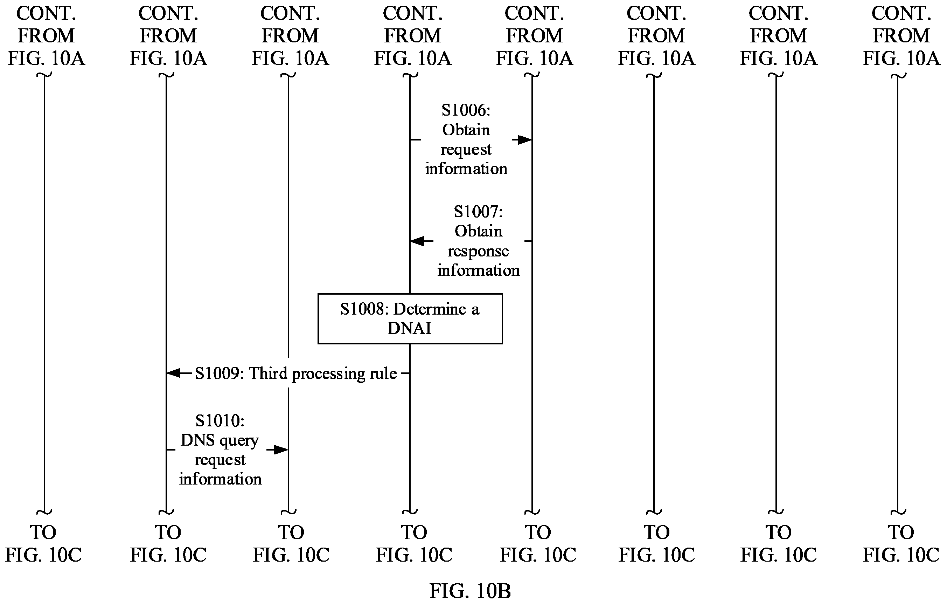

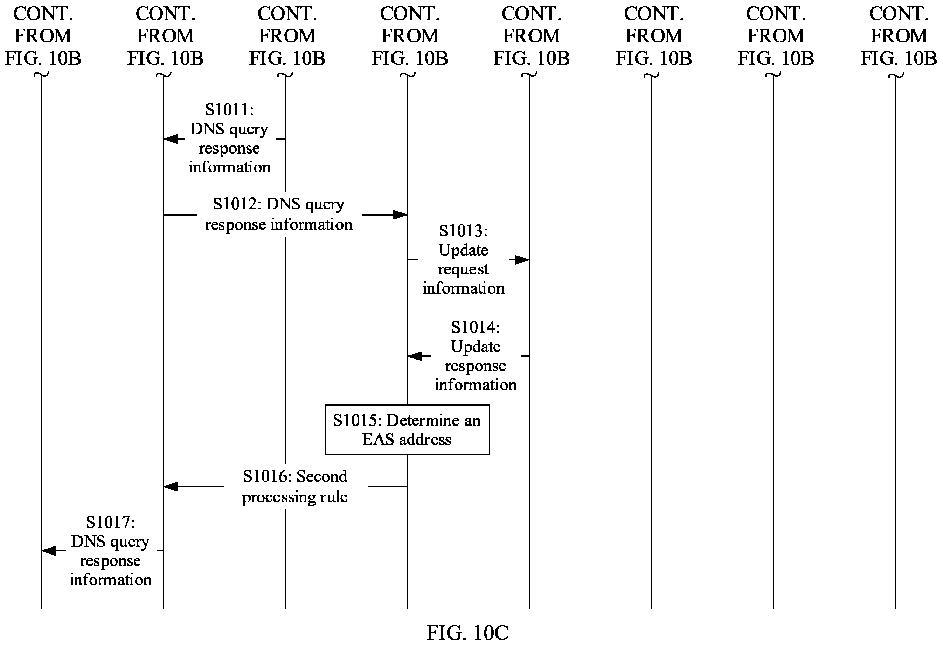

FIG. 10A to FIG. 10C show a yet further method for discovering an edge service according to an embodiment of this application. When neither an SMF network element nor a UDR network element stores a DNAI corresponding to a UE group, the SMF network element may select the DNAI based on a service or a location of UE, and the UDR network element performs coordination, so that when there are a plurality of SMF network elements, each SMF network element determines an EAS address corresponding to the same DNAI for each UE in the UE group.

Steps S1000 to S1007 are respectively similar to steps S900 to S607 described in FIG. 9A and FIG. 9B. Details are not described herein again. In step S1007, obtaining response information may indicate that the UDR network element does not store the DNAI corresponding to the UE group.

S1008: The SMF network element determines the DNAI.

The DNAI is a DNAI that corresponds to the service accessed by the UE and that is stored by the SMF network element. If each UE in the same UE group is connected to the same SMF network element, the SMF network element selects the DNAI for each UE in the UE group, and steps S1013 and S1014 do not need to be performed.

Steps S1009 to S1012 are respectively similar to steps S909 to S912 described in FIG. 9B. Details are not described herein again.

S1013: The SMF network element sends update request information to the UDR network element.

In a possible implementation, if each UE in the UE group is connected to different SMF network elements, to prevent the SMF network elements from selecting different DNAIs for the UE in the same UE group, the SMF network element may send the update request information to the UDR network element, and the UDR network element performs coordination and update, so that the SMF network element finally determines the same EAS address for the UE in the UE group. The update request information includes the DNAI determined by the SMF network element in step S1008.

S1014: The UDR network element sends update response information to the SMF network element.

After receiving the update request information from the SMF network element, the UDR network element determines a DNAI corresponding to an EAS accessed by first UE accessing an edge service in the UE group, and sends the update response information to the SMF network element that subsequently sends an update request. The update response information includes the DNAI. Each SMF network element determines the EAS address in the edge network corresponding to the DNAI for each UE.

In a possible implementation, if the DNAI determined by the SMF network element in step S1008 is different from the DNAI sent by the UDR network element, steps S1008 to S1014 are performed again, until the DNAI determined by the SMF network element for the UE group is the same as the DNAI sent by the UDR network element.

Steps S1015 to S1017 are respectively similar to steps S913 to S915 described in FIG. 9B. Details are not described herein again.

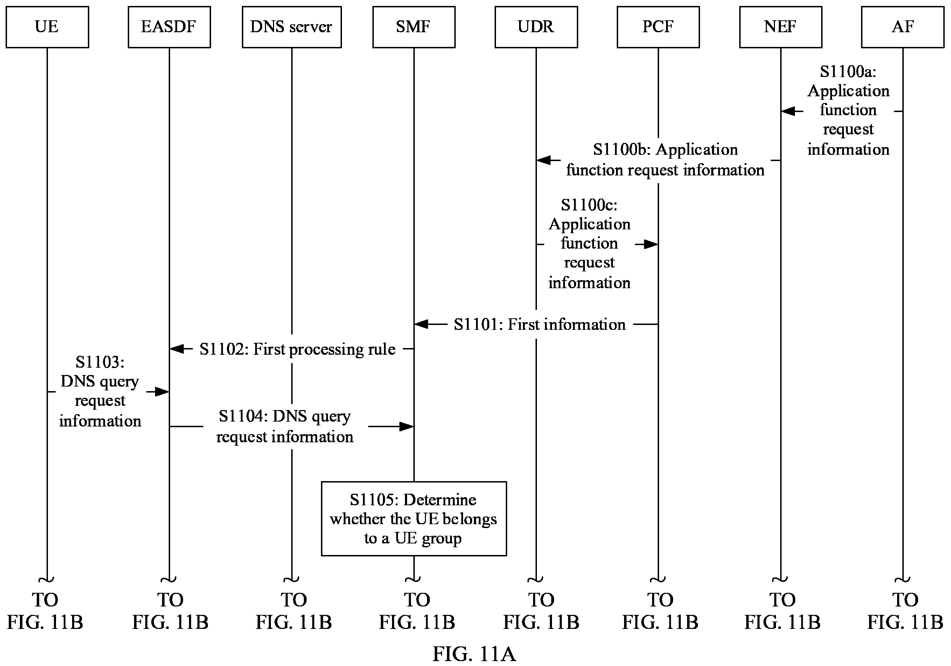

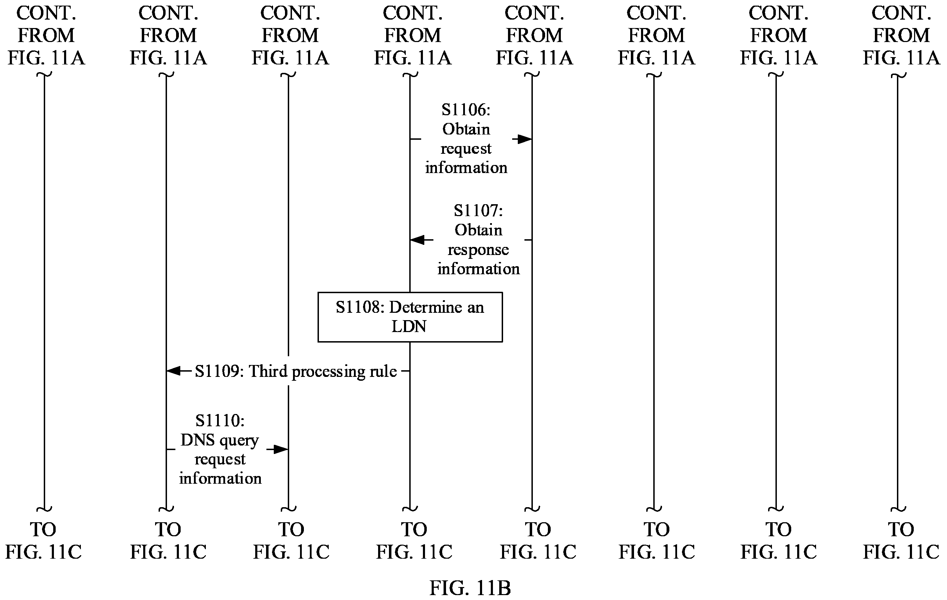

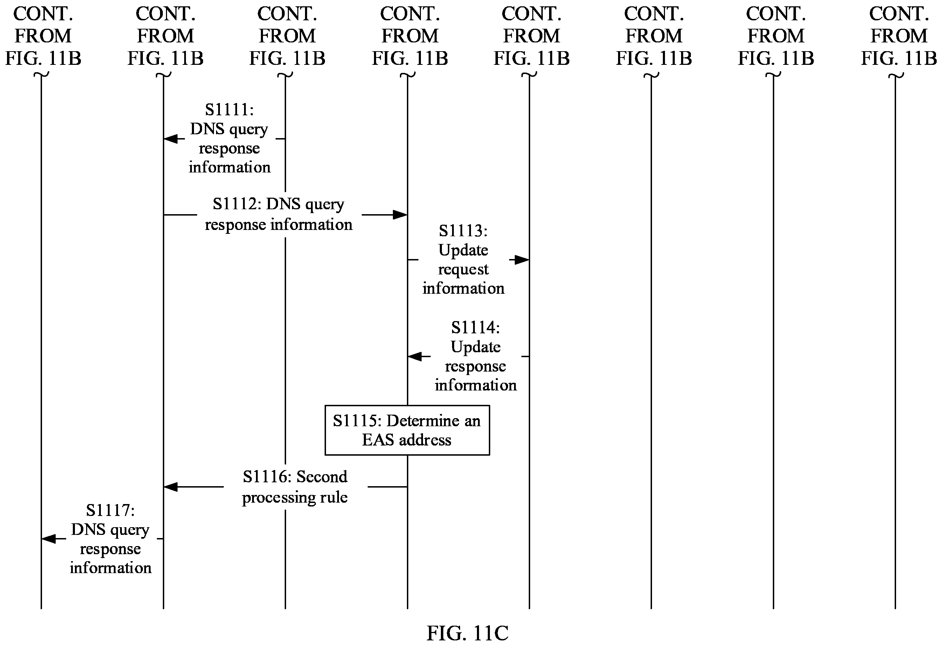

FIG. 11A to FIG. 11C are a schematic interaction diagram of a still yet further method for discovering an edge service according to this application. An SMF network element selects an EAS address in a same LDN for UE in a same UE group, so that each UE in the UE group is connected to an EAS in the same LDN.

Steps S1100 to S1105 are respectively similar to steps S800 to S805 described in FIG. 8A. Details are not described herein again. In step S1100, application function request information may include LDN information and/or ECS option information. Correspondingly, first information may include LDN information and/or ECS option information. The LDN information may be a name of an LDN. If the first information includes the LDN information and/or ECS option information, steps S1106 and S1007 and steps S1113 and S1114 do not need to be performed. In addition, the first information may further include second indication information, and the second indication information indicates the SMF network element to select the EAS address in the same LDN for the UE in the same UE group.

S1106: The SMF network element sends obtaining request information to a UDR network element.

In a possible implementation, if the first information does not include the LDN information of a service corresponding to the UE group, the SMF network element does not store the LDN information of the service corresponding to the UE group, and the UDR network element stores the LDN information corresponding to the UE group, the SMF network element may send the obtaining request information to the UDR network element, to request to obtain the LDN information of the service corresponding to the UE group.

Optionally, the obtaining request information includes UE group information.

S1107: The UDR network element sends obtaining response information to the SMF network element.

The obtaining response information includes the LDN information of the service corresponding to the UE group.

In a possible implementation, the UDR network element may actively send the LDN information to the SMF network element, without being triggered by the obtaining request information sent by the SMF network element to send the LDN information. In other words, the SMF network element may not need to perform step S1106, and step S1107 is directly performed.

S1108: The SMF network element determines the LDN.

In a possible implementation, if the first information includes the LDN information corresponding to the UE group, the SMF network element selects, for each UE in the terminal group, the LDN information in the first information, and selects an ECS option corresponding to the LDN.

In a possible implementation, if the UDR network element stores the LDN information corresponding to the UE group, the SMF network element selects, for each UE in the terminal group, the LDN information sent by the UDR network element, and selects an ECS option corresponding to the LDN.

In a possible implementation, if the SMF network element stores the LDN information corresponding to the UE group, the SMF network element selects the LDN information for each UE in the terminal group, and selects an ECS option corresponding to the LDN.

In a possible implementation, when the first information does not include the LDN information corresponding to the UE group, and neither the SMF network element nor the UDR network element stores the LDN information of the service corresponding to the UE group, the SMF network element determines the LDN information based on the service accessed by the UE or a location area, and selects an ECS option corresponding to the LDN.

Steps S1109 to S1112 are respectively similar to steps S807 to S810 described in FIG. 8B. Details are not described herein again.

S1113: The SMF network element sends update request information to the UDR network element.

In a possible implementation, when each UE in the UE group is connected to different SMF network elements, and the SMF network elements determine the LDN information based on the service accessed by the UE or the location area, to prevent the LDN information determined by the SMF network elements from being different, the SMF network element sends the update request information to the UDR network element. The update request information includes the LDN information determined by the SMF network element, for the UDR network element to perform coordination.

S1114: The UDR network element sends update response information to the SMF network element.

In a possible implementation, the update response information includes the LDN information selected by the UDR, and the LDN information may be an LDN accessed by first UE accessing the edge service in the UE group. The UDR network element maintains the LDN information, and sends the LDN information to each SMF network element in the update request information.

If the LDN information in the update response information is different from the LDN information in the update request information, the SMF network element performs steps S1108 to S1114 again until the LDN information determined by the SMF network element is the same as the LDN information maintained by the UDR network element.

Optionally, the LDN information determined by the SMF network element may also be the same as the LDN information maintained by the UDR network element. In this case, the SMF network element or the like directly performs steps S1116 and S1117.

S1115: The SMF network element determines the EAS address.

The SMF network element selects an EAS address from the determined LDN, and sends the EAS address to an EASDF network element by using a second processing rule, and the EASDF network element sends the EAS address to the UE, that is, steps S1116 and S1117 are performed. Details are not described herein again.

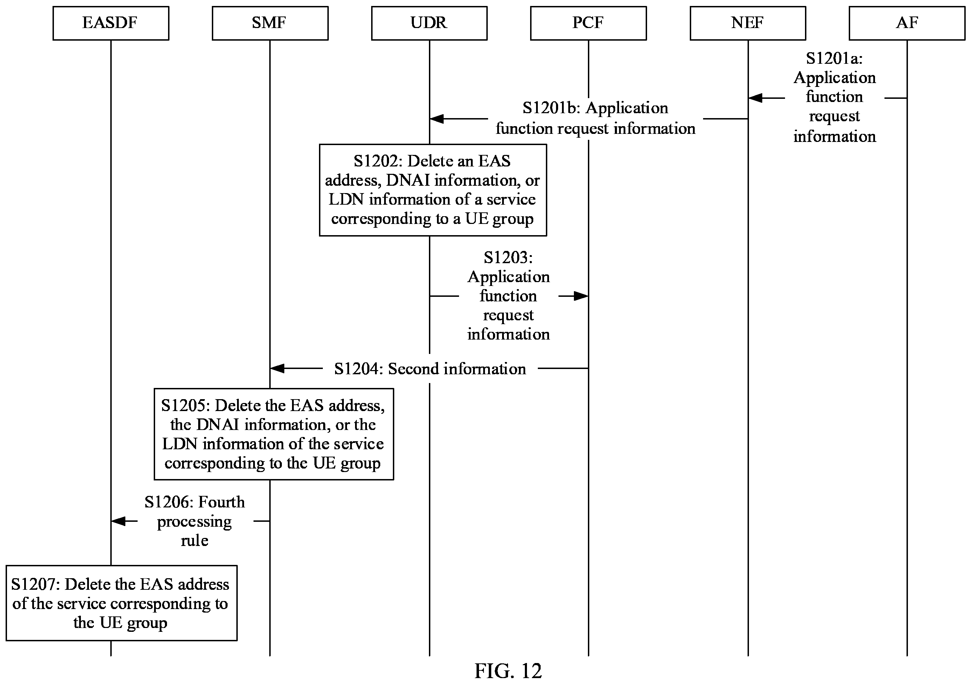

FIG. 12 is a schematic interaction diagram of a method for rediscovering an edge service according to this application. After an edge service discovery process corresponding to the UE group is completed in the methods described in FIG. 4 to FIG. 11C, if new UE is added to the UE group, load of a core network element exceeds a preset range of the core network element, each core network element needs to perform a rediscovery procedure. Each network element deletes the EAS address information, the DNAI information, or the LDN information that are stored in the edge service discovery process, and re-executes the edge service discovery process described in FIG. 4 to FIG. 11C.

S1201: A UDR network element receives application function request information from an AF network element.

Optionally, step S1201 may include steps S1201a and S1201b, that is, an NEF network element may forward the application function request information to the UDR network element.

Content included in the application function request information is similar to the content described in step S500, step S800, and step S1100. Details are not described herein again. The application function request information may further include third indication information, and the third indication information indicates each network element to delete the EAS address information, the DNAI information, or the LDN information stored in the edge service discovery process.

Optionally, the third indication information may be implicitly carried in the application function request information.

S1202: The UDR network element deletes the EAS address information, the DNAI information, or the LDN information of the service corresponding to the UE group.

In a possible implementation, the UDR network element stores the EAS address information, the DNAI information, or the LDN information of the service corresponding to the UE group. After receiving the application function request information from the AF network element, the UDR network element determines, based on service information, identification information, or location area information corresponding to a UE group, the UE group that needs to perform a rediscovery service and a service corresponding to the UE group, and deletes the EAS address information, the DNAI information, or the LDN information of the service corresponding to the UE group.

S1203: The UDR network element sends the application function request information to a PCF network element.

S1204: An SMF network element receives second information from the PCF network element.

The PCF network element generates the second information based on the application function request information, and sends the second information to the SMF network element.

S1205: The SMF network element deletes the EAS address information, the DNAI information, or the LDN information of the service corresponding to the UE group.

In a possible implementation, the SMF network element stores the EAS address information, the DNAI information, or the LDN information of the service corresponding to the UE group. After receiving the second information from the PCF network element, the SMF network element determines, based on the service information, the identification information, or the location area information corresponding to the UE group, the UE group that needs to perform the rediscovery service and the service corresponding to the UE group, and deletes the EAS address information, the DNAI information, or the LDN information of the service corresponding to the UE group.

S1206: The SMF network element sends a fourth processing rule to an EASDF network element.

The fourth processing rule includes an FQDN of the service corresponding to the UE group and a processing rule. The FQDN is used by the EASDF network element to search for an EAS address corresponding to the FQDN. The processing rule indicates the EASDF network element to delete, when the EAS address corresponding to the UE group is determined to be stored, the EAS address corresponding to the UE group.

S1207: The EASDF network element deletes an EAS address, a DNAI, or an LDN corresponding to the UE group.

In a possible implementation, if the EASDF network element stores the EAS address of the service corresponding to the UE group, the EASDF network element searches for the corresponding EAS address based on the FQDN carried in the fourth processing rule, and deletes the EAS address according to the fourth processing rule.

After steps S1201 to S1206, each network element re-executes the edge service discovery process described in FIG. 4 to FIG. 11C, and reselects a corresponding EAS address, DNAI, or LDN for UE in the UE group that accesses a specific service.

In embodiments of this application, "first", "second", and the like are merely intended to indicate that a plurality of objects are different. For example, a first network element and a second network element are merely intended to indicate different network elements, and should impose no impact on the network elements and the quantities thereof. "First", "second", and the like described above should not impose any limitation on embodiments of this application.

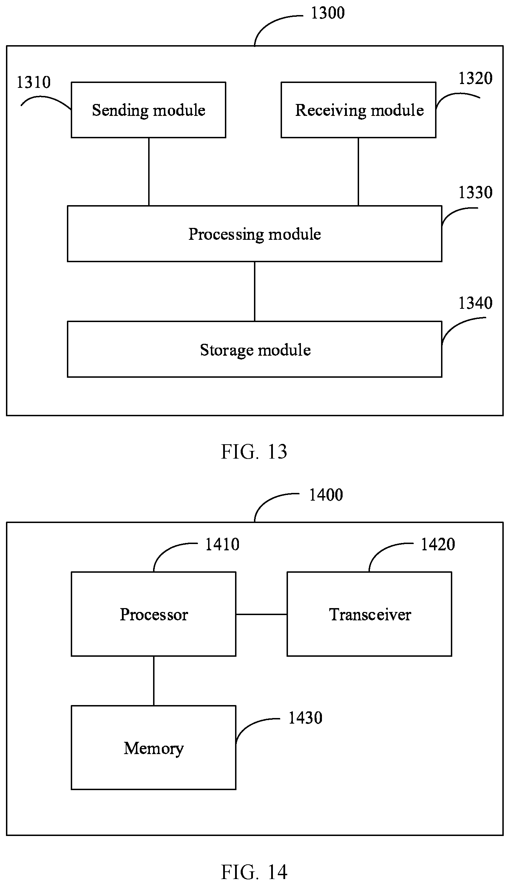

The foregoing describes in detail the method for discovering the edge service in embodiments of this application with reference to FIG. 1 to FIG. 11C. The following describes in detail communication apparatuses in embodiments of this application with reference to FIG. 13 and FIG. 14.

FIG. 13 is a block diagram of a structure of a communication apparatus according to an embodiment of this application. The communication apparatus may have a function of the first network element or the fourth network element in the foregoing method embodiments, and may be configured to perform the steps performed by the first network element or the fourth network element in the foregoing method embodiments.

In a possible implementation, the communication apparatus 1300 shown in FIG. 13 may be used as the first network element in the foregoing method embodiments, and performs the steps performed by the first network element in the foregoing method embodiments.

As shown in FIG. 13, the communication apparatus 1300 may include a sending module 1310 and a receiving module 1320.

The sending module 1310 may be configured to support the communication apparatus 1300 in sending information, for example, performing the sending actions performed by the first network element in S304, S404, S502, S507, S602, S606, S609, S702, S706, S708, S713, S715, S802, S807, S812, S902, S906, S909, S914, S1002, S1006, S1009, S1013, S1016, S1102, S1106, S1109, S1113, S1116, and S1206 in FIG. 3 to FIG. 12.

The receiving module 1320 may be configured to support the communication apparatus 1300 in receiving information, for example, performing the receiving actions performed by the first network element in S301, S302, S401, S402, S501, S504, S601, S604, S607, S701, S704, S707, S711, S714, S801, S804, S810, S901, S904, S907, S912, S1001, S1004, S1007, S1012, S1014, S1101, S1104, S1107, S1112, S1114, and S1204 in FIG. 3 to FIG. 12.

Optionally, the communication apparatus 1300 may further include a processing module 1330. The processing module 1330 is coupled to the sending module 1310 and the receiving module 1320, and may be configured to support the communication apparatus 1300 in performing the processing actions in the foregoing method embodiments, for example, performing the processing actions performed by the first network element in S303, S403, S505, S506, S605, S608, S705, S712, S805, S806, S811, S905, S908, S913, S1005, S1008, S1015, S1105, S1108, S1115, and S1205 in FIG. 3 to FIG. 12.

In another possible implementation, the communication apparatus 1300 shown in FIG. 13 may be used as the fourth network element in the foregoing method embodiments, and performs the steps performed by the fourth network element in the foregoing method embodiments.

As shown in FIG. 13, the communication apparatus 1300 may include a sending module 1310 and a receiving module 1320.

The sending module 1310 may be configured to support the communication apparatus 1300 in sending information, for example, performing the sending actions performed by the fourth network element in S301, S401, S501, S601, S701, S801, S901, S1001, S1101, and S1204 in FIG. 3 to FIG. 12.

The receiving module 1320 may be configured to support the communication apparatus 1300 in receiving information, for example, performing the receiving actions performed by the second network element in S500, S600, S700, S800, S900, S1000, S1100, and S1203 in FIG. 5A to FIG. 12.

Optionally, the communication apparatus 1300 may further include a processing module 1330. The processing module 1330 is coupled to the sending module 1310 and the receiving module 1320, and may be configured to support the communication apparatus 1300 in performing the processing actions in the foregoing method embodiment, for example, performing the processing actions performed by the fourth network element, for example, generating first information based on application function request information.

Optionally, the communication apparatus 1300 may further include a storage module 1340, configured to store program code and data of the communication apparatus 1300.

FIG. 14 is a schematic block diagram of a communication device 1400 according to an embodiment of this application. As shown in the figure, the communication device 1400 includes at least one processor 1410 and a transceiver 1420. The processor 1410 is coupled to a memory, and is configured to execute instructions stored in the memory, to control the transceiver 1420 to send a signal and/or receive a signal.

Optionally, the communication device 1400 further includes the memory 1430, configured to store the instructions.

In some embodiments, the processor 1410 and the memory 1430 may be integrated into one processing apparatus. The processor 1410 is configured to execute program code stored in the memory 1430, to implement the foregoing functions. During specific implementation, the memory 1430 may also be integrated into the processor 1410, or may be independent of the processor 1410.

In some embodiments, the transceiver 1420 may include a receiver (or referred to as a receiver machine) and a transmitter (or referred to as a transmitter machine).

The transceiver 1420 may further include an antenna. There may be one or more antennas. The transceiver 1420 may be a communication interface or an interface circuit.

When the communication device 1400 is a chip, the chip includes a transceiver unit and a processing unit. The transceiver unit may be an input/output circuit or a communication interface. The processing unit may be a processor, a microprocessor, or an integrated circuit that is integrated on the chip.

When the communication apparatus is a chip on a network device, the chip in the network device implements the function of the network device in the foregoing method embodiments. The chip on the network device receives information from another module (for example, a radio frequency module or an antenna) in the network device, where the information is sent by a terminal or another network device to the network device; or the chip on network device outputs information to another module (for example, a radio frequency module or an antenna) in the network device, where the information is sent by the network device to a terminal or another network device.

An embodiment of this application further provides a computer-readable storage medium. The computer-readable storage medium stores a computer program or instructions, and the computer program or the instructions are executed by a computer (for example, a processor), to implement some or all of the steps in any method performed by any apparatus in embodiments of this application.

An embodiment of this application further provides a computer program product including instructions. When the computer program product runs on a computer, some or all of the steps in any method performed by any apparatus in embodiments of this application are performed.

Further embodiments of the present application are provided in the following. It should be noted that the numbering used in the following section does not necessarily need to comply with the numbering used in the previous sections.
Embodiment 1. A method for discovering an edge service, comprising:
   receiving, by a first network element, first information, wherein the first information comprises first service information;
   receiving, by the first network element, second information, wherein the second information comprises first domain name information, the first domain name information is comprised in first domain name system DNS query request information sent by a first terminal device, and the first DNS query request information is used to request application server address information corresponding to the first domain name information;
   when the first domain name information corresponds to the first service information, determining, by the first network element for the first terminal device, an application server that is the same as that of a second terminal device, wherein the second terminal device and the first terminal device access a same service; and
   sending, by the first network element, a first rule, wherein the first rule comprises first application server address information, the first application server address information indicates the same application server, and the first rule indicates a second network element to send the first application server address information to the first terminal device.
Embodiment 2. The method according to embodiment 1, wherein the first information comprises first identification information, and the first identification information indicates a terminal device that accesses a same application server as the first terminal device.
Embodiment 3. The method according to embodiment 1 or 2, wherein the second terminal device belongs to the terminal device indicated by the first identification information.
Embodiment 4. The method according to embodiment 2 or 3, wherein the determining, by the first network element for the first terminal device, an application server that is the same as that of a second terminal device comprises:
   determining, by the first network element for the first terminal device based on the first identification information, the application server that is the same as that of the second terminal device.
Embodiment 5. The method according to any one of embodiments 1 to 4, wherein the first information comprises first indication information, and the first indication information indicates to determine a same application server for terminal devices accessing a same service.
Embodiment 6. The method according to embodiment 5, wherein the determining, by the first network element for the first terminal device, an application server that is the same as that of a second terminal device comprises:
   determining, by the first network element for the first terminal device based on the first indication information, the application server that is the same as that of the second terminal device.
Embodiment 7. The method according to any one of embodiments 1 to 6, wherein before the sending, by the first network element, a first rule, the method further comprises:
   sending, by the first network element, a second rule, wherein the second rule comprises first option information, the first option information is used by a DNS server to determine application server address information, the second rule indicates the second network element to send second DNS query request information to the DNS server, and the second DNS query request information comprises the first option information and the first domain name information.
Embodiment 8. The method according to embodiment 7, wherein the method further comprises:
   receiving, by the first network element, third information, wherein the third information comprises the first domain name information and one or more pieces of application server address information, and the one or more pieces of application server address information are determined by the DNS server.
Embodiment 9. The method according to any one of embodiments 1 to 8, wherein before the sending, by the first network element, a first rule, the method further comprises:
   sending, by the first network element, first request information, wherein the first request information comprises second application server address information, and a second application server address is one of one or more application server addresses.
Embodiment 10. The method according to embodiment 9, wherein the method further comprises:
   receiving, by the first network element, first response information responding to the first request information, wherein the first response information comprises the first application server address information.
Embodiment 11. The method according to embodiment 9 or 10, wherein application servers indicated by the second application server address information and the first application server address information are the same.
Embodiment 12. The method according to any one of embodiments 1 to 6, wherein before the sending, by the first network element, a first rule, the method further comprises:
   receiving, by the first network element, fourth information, wherein the fourth information comprises the first application server address information.
Embodiment 13. The method according to embodiment 12, wherein before the receiving, by the first network element, fourth information, the method further comprises:
   sending, by the first network element, fifth information, wherein the fifth information is used to obtain the application server address information corresponding to the first domain name information.
Embodiment 14. The method according to any one of embodiments 1 to 6, wherein the first information comprises the first application server address information.
Embodiment 15. A method for discovering an edge service, comprising:
   receiving, by a fourth network element, application function request information, wherein the application function request information is used to control routing of a service traffic;
   generating, by the fourth network element, first information based on the application function request information, wherein the first information comprises first service information; and
   sending, by the fourth network element, the first information.
Embodiment 16. The method according to embodiment 15, wherein the first information comprises first identification information, and the first identification information indicates a terminal device that accesses a same application server as a first terminal device.
Embodiment 17. The method according to embodiment 15 or 16, wherein the first information comprises first indication information, and the first indication information indicates to determine a same application server for terminal devices accessing a same service.
Embodiment 18. The method according to any one of embodiments 15 to 17, wherein the first information comprises first application server address information, and the first application server address information indicates an application server determined by a first network element for the first terminal device.
Embodiment 19. A method for discovering an edge service, comprising:
   receiving, by a first network element, first information, wherein the first information comprises first service information;
   receiving, by the first network element, second information, wherein the second information comprises first domain name information, the first domain name information is comprised in first DNS query request information sent by a first terminal device, and the first DNS query request information is used to request application server address information corresponding to the first domain name information;
   when the first domain name information corresponds to the first service information, determining, by the first network element for the first terminal device, an application server in an edge network that is the same as that of a second terminal device, wherein the second terminal device and the first terminal device access a same service; and
   sending, by the first network element, a third rule, wherein the third rule comprises second option information, and the second option information is used by a DNS server to determine application server address information.
Embodiment 20. The method according to embodiment 19, wherein the second option information is determined by the first network element based on second identification information, and the second identification information indicates the same edge network.
Embodiment 21. The method according to embodiment 19 or 20, wherein the first information comprises third identification information, and the third identification information indicates a terminal device that accesses an application server in a same edge network as the first terminal device.
Embodiment 22. The method according to embodiment 21, wherein the second terminal device belongs to the terminal device indicated by the third identification information.
Embodiment 23. The method according to embodiment 21 or 22, wherein the determining, by the first network element for the first terminal device, an application server in an edge network that is the same as that of a second terminal device comprises:
   determining, by the first network element for the first terminal device based on the third identification information, the application server in the edge network that is the same as that of the second terminal device.
Embodiment 24. The method according to any one of embodiments 19 to 22, wherein the first information comprises second indication information, and the second indication information indicates to determine an application server in a same edge network for terminal devices accessing a same service.
Embodiment 25. The method according to embodiment 24, wherein the determining, by the first network element for the first terminal device, an application server in an edge network that is the same as that of a second terminal device comprises:
   determining, by the first network element for the first terminal device based on the second indication information, the application server in the edge network that is the same as that of the second terminal device.
Embodiment 26. The method according to any one of embodiments 19 to 25, wherein the method further comprises:
   sending, by the first network element, second request information, wherein the second request information comprises the second identification information.
Embodiment 27. The method according to embodiment 26, wherein the method further comprises:
   receiving, by the first network element, second response information responding to the second request information, wherein the second response information comprises fourth identification information.
Embodiment 28. The method according to embodiment 27, wherein the fourth identification information and the second identification information correspond to a same edge network.
Embodiment 29. The method according to any one of embodiments 19 to 25, wherein before the sending, by the first network element, a third rule, the method further comprises:
   receiving, by the first network element, sixth information, wherein the sixth information comprises the second identification information and/or the second option information.
Embodiment 30. The method according to embodiment 29, wherein before the receiving, by the first network element, sixth information, the method further comprises:
   sending, by the first network element, seventh information, wherein the seventh information is used to obtain edge network information corresponding to the first domain name information.
Embodiment 31.
   The method according to any one of embodiments 19 to 25, wherein the first information comprises the second identification information and/or the second option information.
Embodiment 32. The method according to any one of embodiments 19 to 31, wherein the method further comprises:
   sending, by the first network element, a fourth rule, wherein the fourth rule comprises first application server address information, the first application server address information indicates an application server in the edge network corresponding to the second identification information, and the fourth rule indicates a second network element to send the first application server address information to the first terminal device.
Embodiment 33. A method for discovering an edge service, comprising:
   receiving, by a fourth network element, application function request information, wherein the application function request information is used to control routing of a service traffic;
   generating, by the fourth network element, first information based on the application function request information, wherein the first information comprises first service information; and
   sending, by the fourth network element, the first information.
Embodiment 34. The method according to embodiment 33, wherein the first information comprises third identification information, and the third identification information indicates a terminal device that accesses an application server in a same edge network as a first terminal device.
Embodiment 35. The method according to embodiment 33 or 34, wherein the first information comprises second indication information, and the second indication information indicates to determine an application server in a same edge network for terminal devices accessing a same service.
Embodiment 36. The method according to any one of embodiments 33 to 35, wherein the first information comprises second identification information and/or second option information, the second identification information indicates an edge network determined for the first terminal device, and the second option information is used by a DNS server to determine application server address information.
Embodiment 37. A method for discovering an edge service, comprising:
   receiving, by a fourth network element, application function request information from a fifth network element, wherein the application function request information is used to control routing of a service traffic;
   generating, by the fourth network element, first information based on the application function request information, wherein the first information comprises first service information;
   sending, by the fourth network element, the first information to a first network element;
   receiving, by the first network element, the first information from the fourth network element;
   receiving, by the first network element, second information from a second network element, wherein the second information comprises first domain name information, the first domain name information is comprised in first domain name system DNS query request information sent by a first terminal device, and the first DNS query request information is used to request application server address information corresponding to the first domain name information;
   when the first domain name information corresponds to the first service information, determining, by the first network element for the first terminal device, an application server that is the same as that of a second terminal device, wherein the second terminal device and the first terminal device access a same service; and
   sending, by the first network element, a first rule to the second network element, wherein the first rule comprises first application server address information, the first application server address information indicates the same application server, and the first rule indicates the second network element to send the first application server address information to the first terminal device.
Embodiment 38. The method according to embodiment 37, wherein the first information comprises first identification information, and the first identification information indicates a terminal device that accesses a same application server as the first terminal device.
Embodiment 39. The method according to embodiment 37 or 38, wherein the second terminal device belongs to the terminal device indicated by the first identification information.
Embodiment 40. The method according to embodiment 38 or 39, wherein the determining, by the first network element for the first terminal device, an application server that is the same as that of a second terminal device comprises:
   determining, by the first network element for the first terminal device based on the first identification information, the application server that is the same as that of the second terminal device.
Embodiment 41. The method according to any one of embodiments 37 to 40, wherein the first information comprises first indication information, and the first indication information indicates to determine a same application server for terminal devices accessing a same service.
Embodiment 42. The method according to embodiment 41, wherein the determining, by the first network element for the first terminal device, an application server that is the same as that of a second terminal device comprises:
   determining, by the first network element for the first terminal device based on the first indication information, the application server that is the same as that of the second terminal device.
Embodiment 43. The method according to any one of embodiments 37 to 42, wherein before the sending, by the first network element, a first rule to the second network element, the method further comprises:
   sending, by the first network element, a second rule to the second network element, wherein the second rule comprises first option information, the first option information is used by a DNS server to determine application server address information, the second rule indicates the second network element to send second DNS query request information to the DNS server, and the second DNS query request information comprises the first option information and the first domain name information.
Embodiment 44. The method according to embodiment 43, wherein the method further comprises:
   receiving, by the first network element, third information from the second network element, wherein the third information comprises the first domain name information and one or more pieces of application server address information, and the one or more pieces of application server address information are determined by the DNS server.
Embodiment 45. The method according to any one of embodiments 37 to 44, wherein before the sending, by the first network element, a first rule to the second network element, the method further comprises:
   sending, by the first network element, first request information to a third network element, wherein the first request information comprises second application server address information, and a second application server address is one of one or more application server addresses.
Embodiment 46. The method according to embodiment 45, wherein the method further comprises:
   receiving, by the first network element, first response information from the third network element in response to the first request information, wherein the first response information comprises the first application server address information.
Embodiment 47. The method according to embodiment 45 or 46, wherein application servers indicated by the second application server address information and the first application server address information are the same.
Embodiment 48. The method according to any one of embodiments 37 to 42, wherein before the sending, by the first network element, a first rule to the second network element, the method further comprises:
   receiving, by the first network element, fourth information from a third network element, wherein the fourth information comprises the first application server address information.
Embodiment 49. The method according to embodiment 48, wherein before the receiving, by the first network element, fourth information from a third network element, the method further comprises:
   sending, by the first network element, fifth information to the third network element, wherein the fifth information is used to obtain the application server address information corresponding to the first domain name information.
Embodiment 50. The method according to any one of embodiments 37 to 42, wherein the first information comprises the first application server address information.
Embodiment 51. A method for discovering an edge service, comprising:
   receiving, by a fourth network element, application function request information from a fifth network element, wherein the application function request information is used to control routing of a service traffic;
   generating, by the fourth network element, first information based on the application function request information, wherein the first information comprises first service information;
   sending, by the fourth network element, the first information to a first network element;
   receiving, by the first network element, the first information from the fourth network element;
   receiving, by the first network element, second information from a second network element, wherein the second information comprises first domain name information, the first domain name information is comprised in first DNS query request information sent by a first terminal device, and the first DNS query request information is used to request application server address information corresponding to the first domain name information;
   when the first domain name information corresponds to the first service information, determining, by the first network element for the first terminal device, an application server in an edge network that is the same as that of a second terminal device, wherein the second terminal device and the first terminal device access a same service; and
   sending, by the first network element, a third rule to the second network element, wherein the third rule comprises second option information, and the second option information is used by a DNS server to determine application server address information.
Embodiment 52. The method according to embodiment 51, wherein the second option information is determined by the first network element based on second identification information, and the second identification information indicates the same edge network.
Embodiment 53. The method according to embodiment 51 or 52, wherein the first information comprises third identification information, and the third identification information indicates a terminal device that accesses an application server in a same edge network as the first terminal device.
Embodiment 54. The method according to embodiment 53, wherein the second terminal device belongs to the terminal device indicated by the third identification information.
Embodiment 55. The method according to embodiment 53 or 54, wherein the determining, by the first network element for the first terminal device, an application server in an edge network that is the same as that of a second terminal device comprises:
   determining, by the first network element for the first terminal device based on the third identification information, the application server in the edge network that is the same as that of the second terminal device.
Embodiment 56. The method according to any one of embodiments 51 to 54, wherein the first information comprises second indication information, and the second indication information indicates to determine an application server in a same edge network for terminal devices accessing a same service.
Embodiment 57. The method according to embodiment 56, wherein the determining, by the first network element for the first terminal device, an application server in an edge network that is the same as that of a second terminal device comprises:
   determining, by the first network element for the first terminal device based on the second indication information, the application server in the edge network that is the same as that of the second terminal device.
Embodiment 58. The method according to any one of embodiments 51 to 57, wherein the method further comprises:
   sending, by the first network element, second request information to a third network element, wherein the second request information comprises the second identification information.
Embodiment 59. The method according to embodiment 58, wherein the method further comprises:
   receiving, by the first network element, second response information from the third network element in response to the second request information, wherein the second response information comprises fourth identification information.
Embodiment 60. The method according to embodiment 59, wherein the fourth identification information and the second identification information correspond to a same edge network.
Embodiment 61. The method according to any one of embodiments 51 to 57, wherein before the sending, by the first network element, a third rule to the second network element, the method further comprises:
   receiving, by the first network element, sixth information from a third network element, wherein the sixth information comprises the second identification information and/or the second option information.
Embodiment 62. The method according to embodiment 61, wherein before the receiving, by the first network element, sixth information from a third network element, the method further comprises:
   sending, by the first network element, seventh information to the third network element, wherein the seventh information is used to obtain edge network information corresponding to the first domain name information.
Embodiment 63. The method according to any one of embodiments 51 to 57, wherein the first information comprises the second identification information and/or the second option information.
Embodiment 64. The method according to any one of embodiments 51 to 63, wherein the method further comprises:
   sending, by the first network element, a fourth rule to the second network element, wherein the fourth rule comprises first application server address information, the first application server address information indicates an application server in the edge network corresponding to the second identification information, and the fourth rule indicates the second network element to send the first application server address information to the first terminal device.
Embodiment 65. A system for discovering an edge service, comprising a first network element, wherein the first network element is configured to perform the method according to any one of claims 1 to 14.
Embodiment 66. The system according to embodiment 65, wherein the system further comprises a fourth network element, and the fourth network element is configured to perform the method according to any one of claims 15 to 18.
Embodiment 67. The system according to embodiment 65 or 66, wherein the system further comprises a third network element, wherein
   the third network element is configured to receive first request information from the first network element; and
   the third network element is further configured to send first response information to the first network element.
Embodiment 68. The system according to embodiment 65 or 66, wherein the system further comprises a third network element, wherein
   the third network element is configured to receive fifth information from the first network element; and
   the third network element is further configured to send fourth information to the first network element.
Embodiment 69. The system according to any one of embodiments 65 to 68, wherein the system further comprises a fifth network element, the fifth network element is configured to send application function request information to the fourth network element, and the application function request information is used to control routing of a service traffic.
Embodiment 70. A system for discovering an edge service, comprising a first network element, wherein the first network element is configured to perform the method according to any one of claims 19 to 32.
Embodiment 71. The system according to embodiment 69, wherein the system further comprises a fourth network element, and the fourth network element is configured to perform the method according to any one of claims 33 to 36.
Embodiment 72. The system according to embodiment 69 or 70, wherein the system further comprises a third network element, wherein
   the third network element is configured to receive second request information from the first network element; and
   the third network element is further configured to send second response information to the first network element.
Embodiment 73. The system according to embodiment 69 or 70, wherein the system further comprises a third network element, wherein
   the third network element is configured to receive seventh information from the first network element; and
   the third network element is further configured to send sixth information to the first network element.
Embodiment 74. The system according to any one of embodiments 69 to 73, wherein the system further comprises a fifth network element, the fifth network element is configured to send application function request information to the fourth network element, and the application function request information is used to control routing of a service traffic.
Embodiment 75. An apparatus for discovering an edge service, comprising a module or a unit configured to perform the method according to any one of claims 1 to 14, or comprising a module or a unit configured to perform the method according to any one of claims 15 to 18, or comprising a module or a unit configured to perform the method according to any one of claims 19 to 32, or comprising a module or a unit configured to perform the method according to any one of claims 33 to 36.
Embodiment 76. An apparatus for discovering an edge service, comprising:
   a processor, wherein the processor is coupled to a memory, the memory is configured to store a program or instructions, and when the program or the instructions are executed by the processor, the apparatus is enabled to perform the method according to any one of claims 1 to 14; or the apparatus is enabled to perform the method according to any one of claims 15 to 18; or the apparatus is enabled to perform the method according to any one of claims 19 to 32; or the apparatus is enabled to perform the method according to any one of claims 33 to 36.
Embodiment 77. A chip system, comprising:
   a memory, configured to store a computer program; and
   a processor, configured to invoke the computer program from the memory and run the computer program, so that a device on which the chip system is installed performs the method according to any one of claims 1 to 14, or the method according to any one of claims 15 to 18, or the method according to any one of claims 19 to 32, or the method according to any one of claims 33 to 36.
Embodiment 78. A computer-readable storage medium, comprising a computer program, wherein when the computer program is run on a computer, the computer is enabled to perform the method according to any one of claims 1 to 14, or the method according to any one of claims 15 to 18, or the method according to any one of claims 19 to 32, or the method according to any one of claims 33 to 36

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for discovering an edge service, comprising:
receiving first information, wherein the first information comprises first service information;
receiving second information, wherein the second information comprises first domain name information, the first domain name information is comprised in first domain name system DNS query request information from a first terminal device, and the first DNS query request information is used to request application server address information corresponding to the first domain name information;
when the first domain name information comprises the first service information, determining, for the first terminal device, an application server that is the same as that of a second terminal device, wherein the second terminal device and the first terminal device access a same service; and
sending a first rule, wherein the first rule comprises first application server address information, the first application server address information indicates the same application server, and the first rule indicates to send the first application server address information to the first terminal device.

2. The method according to claim 1, wherein the first information further comprises first identification information, the first identification information is an identification of a terminal group, and the first terminal device and the second terminal device belong to the terminal group;
wherein the determining, for the first terminal device, an application server that is the same as that of a second terminal device comprises:
determining, for the first terminal device based on the first identification information, the application server that is the same as that of the second terminal device.

3. The method according to claim 1 or 2, wherein the first information further comprises first indication information, and the first indication information indicates to determine a same application server for terminal devices accessing a same service;
wherein the determining, for the first terminal device, an application server that is the same as that of a second terminal device comprises:
determining, for the first terminal device based on the first indication information, the application server that is the same as that of the second terminal device.

4. The method according to any one of claims 1 to 3, wherein the method is performed by a session management network element, wherein the sending a first rule comprises: sending the first rule to an edge application server discovery function network element, and wherein the receiving first information comprises: receiving the first information from a policy control function network element.

5. The method according to any one of claims 1 to 4, wherein the first information comprises location area information, and the first terminal device and the second terminal device are located in a location area indicated by the location area information.

6. A method for discovering an edge service, comprising:
receiving application function request information, wherein the application function request information is used to control routing of a service traffic;
generating first information based on the application function request information, wherein the first information comprises first service information, and the first information is for determining a same application server for terminal devices in a terminal group; and
sending the first information.

7. The method according to claim 6, wherein the first information comprises first identification information, the first identification information is an identification of the terminal group, and the first terminal device and the second terminal device belong to the terminal group.

8. The method according to claim 6 or 7, wherein the first information comprises first indication information, and the first indication information indicates to determine a same application server for terminal devices accessing a same service.

9. The method according to any one of claims 6 to 8, wherein the first information comprises location area information, and the first terminal device and the second terminal device are located in a location area indicated by the location area information.

10. The method according to any one of claims 6 to 9, wherein the method is performed by a policy control function network element, wherein the sending the first information comprises: sending the first information to a session management network element.

11. The method according to any one of claims 6 to 10, wherein the application function request information comprises one or more of the following: the first service information, the first indication information, the first identification information, or the location area information.

12. An apparatus for discovering an edge service, configured to perform the method according to any one of claims 1 to 5, or the method according to any one of claims 6 to 11.

13. A computer-readable storage medium, comprising a computer program, wherein when the computer program is run on a computer, the computer is enabled to perform the method according to any one of claims 1 to 5, or the method according to any one of claims 6 to 11.

14. A computer program product comprising a computer program or a group of instructions, and when the computer program or the group of instructions is run by on computer, the computer is enabled to perform the method according to any one of claims 1 to 5, or the method according to any one of claims 6 to 11.

15. A system for discovering an edge service, comprising a first network element configured to perform the method according to any one of claims 1 to 5; and a fourth network element network element configured to perform the method according to any one of claims 6 to 11.
